# EUROPÄISCHE PATENTSCHRIFT

(11) **EP 1 004 063 B1**
(45) Veröffentlichungstag und Bekanntmachung des Hinweises auf die Patenterteilung: **09.10.2002**
(21) Anmeldenummer: 98938502.6
(22) Anmeldetag: 18.08.1998
(51) Int. Cl.: G05B 19/414

(54) **INTELLIGENTE ACHSE SOWIE VERFAHREN**
SMART AXES AND RELATED METHOD
AXES INTELLIGENTS ET PROCEDE CORRESPONDANT

(30) Priorität: 18.08.1997 AT 138497
(43) Veröffentlichungstag der Anmeldung: 31.05.2000
(60) Teilanmeldung: 01123912.6
(73) Patentinhaber: Sticht, Walter, A-4800 Attnang-Puchheim (AT)
(72) Erfinder: Sticht, Walter, A-4800 Attnang-Puchheim (AT)
(74) Vertreter: Secklehner, Günter, Dr.
(86) Internationale Anmeldenummer: AT9800194
(87) Internationale Veröffentlichungsnummer: WO99009462

(56) Entgegenhaltungen:
- EP-A- 0 240 965
- EP-A- 0 275 992
- WO-A-97/23839
- DE-A- 4 232 519
- FR-A- 2 657 807
- US-A- 4 841 450
- FUKUDA T ET AL: "FUZZY, NEURAL NETWORK, AND GENETIC ALGORITHM BASED CONTROL SYSTEM" PROCEEDINGS OF THE INTERNATIONAL CONFERENCE ON INDUSTRIAL ELECTRONI CONTROL AND INSTRUMENTATION. (IECON), BOLOGNA, SEPT. 5 - 9, 1994 ROBOTICS, VISION AND SENSORS, FACTORY AUTOMATION, EMERGING TECHNOLOGIES, Bd. 2, Nr. CONF. 20, 1994, Seiten 1220-1225, XP000525500 INSTITUTE OF ELECTRICAL AND ELECTRONICS ENGINEERS

## Beschreibung

Die Erfindung betrifft eine Bewegungseinheit, wie sie im Oberbegriff des Anspruches 1 beschrieben ist.

Aus der EP 0 240 965 A ist ein kompaktes elektrohydraulisches Schaltmodul bekannt, das beispielsweise zur Ansteuerung von Bewegungseinheiten verwendet wird, welches aus einem Ventilkolben und ein den Ventilkolben umhüllendes Ventilgehäuse mit einer über eine Spule gebildete Antriebsanordnung besteht, wobei die Antriebsanordnung über ein befehlsverarbeitendes Element, beispielsweise einem Mikroprozessor angesteuert ist.

Aus der DE 41 06 689 A1 ist ein Verfahren zum Steuern einer Arbeitsmaschine, insbesondere eines Montageautomaten sowie eine derartige Arbeitsmaschine bekannt. Diese weist eine Vielzahl von Werkstückträger auf, die auf einer Bewegungsbahn bzw. Arbeitsstrecke in einer Transportrichtung an Arbeitsstationen vorbeibewegt werden. Diese sind jeweils für wenigstens eine vorgegebene Arbeit ausgebildet und zumindest teilweise durch eine elektronische Steuereinrichtung gesteuert. Jede Arbeitsstation weist eine eigene elektronische Steuereinrichtung auf, die mit den Steuereinrichtungen der übrigen Arbeitsstationen gleichwertig ist, wobei die Steuereinrichtung jeder Arbeitsstation über eine Daten- und Steuerleitung lediglich mit der in Transportrichtung unmittelbar folgenden und/oder unmittelbar vorangehenden Arbeitsstation zusammenwirkt. An der ersten Arbeitsstation wird für jeden Werkstückträger ein elektronisches Protokoll erstellt, welches neben einer diesen Werkstückträger identifizierenden bzw. kennzeichnenden Identifikation zumindest die entlang der Transportrichtung an dén nachfolgenden Arbeitsstationen auszuführenden Arbeiten enthält. Dieses Protokoll wird dann entsprechend den Arbeitsschritten über eine Datenleitung von der Steuereinrichtung der vorangehenden Arbeitsstation an die Steuereinrichtung der nachfolgenden Arbeitsstation weitergeleitet. Nachteilig bei dieser Ausbildung ist, daß die einzelnen Arbeitsstationen entsprechend den durchzuführenden Arbeiten durch verschiedenste Bauteile aufgebaut sind, wodurch eine Serienfertigung der verschiedenen Bauteile ausgeschlossen wird. Dadurch ist es unmöglich, einen derartigen Montageautomaten aus standardisierten Einzelkomponenten herzustellen, was sind insbesondere auf die Herstellkosten eines derartigen Montageautomaten negativ auswirkt. Weiters ist nachteilig, daß in einem einmal in Gang gesetzten Produktionsprozeß nicht mehr eingegriffen werden kann, um beispielsweise ein fehlerhaftes Protokoll zu korrigieren. Weiters ist eine zentrale Überwachung bzw. eine direkte Programmierung einer beliebigen Arbeitsstation mit beispielsweise zusätzlichem Simulationsdurchgang nicht möglich.

In der EP 0 275 992 A ist ein Verfahren zur Ansteuerung einer Maschinenanlage beispielsweise Fertigungsstraßen, Fördersysteme usw. mit mehreren Aktoren insbesondere Elektromotoren, aber auch andere elektrisch steuerbare und elektromechanische Betätigungseinrichtungen beschrieben, wobei ein Teil der Aktoren zu einer Gruppe zusammengefaßt und daß jedem der Aktoren in dieser Gruppe eine Steuereinheit zugeordnet ist.

Gleichermaßen wird auch in der FR 2 657 807 A eine dezentralisierte Ansteuerung beispielsweise einer Bewegungseinheit beschrieben.

Der Erfindung liegt nun die Aufgabe zugrunde, eine Bewegungseinheit zu schaffen, welche aus standardisierten Einzelkomponenten aufgebaut ist und selbst wiederum als standardisierte Komponente in eine Gesamtanlage integriert werden und somit ein modularer Aufbau - beispielsweise einer Montagestraße - geschaffen werden kann.

Die Aufgabe der Erfindung wird durch die im Kennzeichenteil des Anspruches 1 wiedergegebenen Merkmale gelöst. Der überraschende Vorteil dabei ist, daß die zumindest ein Schaltmodul und zumindest ein Steuermodul aufweisende Steuereinrichtung unmittelbar mit der Bewegungseinheit verbunden ist und so einerseits aufwendige Verlegungsarbeiten von Verbindungsleitungen vermieden werden und andererseits bestimmte Funktionen der Verstelleinheit ohne externe Programmierung vorgegeben werden können. Dadurch kann beispielsweise der Programmieraufwand erheblich reduziert, sowie die Möglichkeit geschaffen werden, die Transportvorrichtungen standardmäßig in Serie zu produzieren ohne das eine auf den konkreten Einsatzfall abgestellte Sonderanfertigung notwendig wird. Weiters wird die Zugänglichkeit zu den einzelnen Bauteilen im Bereich einer Maschine erheblich verbessert, wenn die beiden von Schaltmodul zur Antriebseinrichtung führenden Versorgungsleitungen durch Integration des Schaltmoduls in die Antriebseinrichtung bzw. in die Bauteile wegfallen. Ein weiterer Vorteil ergibt sich aus den kurzen Zuleitungen, die eine Vermeidung von unerwünschten Dämpfungen infolge der elastischen Dehnung der Zuleitungen, Reibungsverluste etc. zulassen, die zu einer erhebliche Verbesserung der Schaltzeiten, Reaktionszeiten, Produktivität etc. führen.

Von Vorteil ist eine Ausgestaltung nach Anspruch 2, wodurch eine standardisierte Antriebseinrichtung in ihrer Wirkungsweise effizient einsetzbar ist. Weiters kann eine aufwendige Verkabelung bzw. Verschlauchung vermieden und der Montageaufwand weiter reduziert werden.

Vorteilhaft ist aber auch eine Ausführungsvariante nach Anspruch 3, wodurch Informationen aus verschiedensten Bereichen der Bewegungseinheit zentral gesammelt werden können.

Von Vorteil ist auch die Ausbildung nach Anspruch 4, wonach die Geschwindigkeit des Kolbens verändert werden kann.

Dabei hat sich eine Fortbildung nach Anspruch 5 als günstig erwiesen, welche eine rasche und einfache Herstellung einer Verbindung ermöglicht.

Eine weitere Ausbildungsvariante ist in Anspruch 6 beschrieben, bei der Informationen aus einem zentralen Bereich an die verschiedenen Einheiten einer Bewegungseinheit übermittelt werden können.

Wird dabei eine Weiterbildung nach Anspruch 7 verwirklicht, so kann auch bezüglich der ausgehenden Informationen eine rasche und einfache Leitungsverbindung hergestellt werden.

Vorteilhaft ist aber auch eine Ausführungsvariante nach Anspruch 8, wodurch eine Festlegung von Programmabläufen unmittelbar in der Steuereinrichtung durchgeführt werden kann.

Von Vorteil sind die Weiterbildungen nach den Ansprüchen 9 und 10, wodurch eine geringe Baugröße der Steuereinrichtung und eine rasche Informationsübertragung gewährleistet wird.

Eine Ausführungsvariante nach Anspruch 11 hat den Vorteil, daß die Steuereinrichtung von einer externen Energieversorgung unabhängig ist und damit ein störungs-freier Betrieb der Bewegungseinheit gewährleistet wird.

Möglich ist aber auch eine Fortbildung nach Anspruch 12, wodurch in einfacher Weise eine Anpassung der Einrichtung an unterschiedlichste Situationen und damit ein hohes Maß an Flexibilität erreicht wird.

Eine Ausführung nach den Ansprüchen 13 bis 16 hat den Vorteil, daß eine Energie- bzw. Informationsübertragung durch robuste Elemente erreicht wird, wodurch der Wartungsaufwand für derartige Bewegungseinheiten reduziert wird.

Vorteilhaft ist aber auch eine Weiterbildung nach Anspruch 17, wodurch der modulare Aufbau der Bewegungseinheit bzw. einer aus Bewegungseinheiten zusammengesetzten Montageanlage verbessert wird, was insbesondere zur Reduktion von Montagekosten führt.

Als vorteilhaft hat sich dabei eine Ausführungsvariante nach Anspruch 18 erwiesen, wo auch die Anschlüsse für die Steuereinrichtung für einen modularen Aufbau der Bewegungseinheit bzw. einer aus dieser zusammengesetzten Montageeinheit ausgebildet sind.

Möglich ist aber auch eine Weiterbildung nach Anspruch 19, durch die die Montage der Schalt-Module rasch durchgeführt werden kann und eine beliebige Anordnung der Schaltmodule in der Bewegungseinheit möglich ist.

Vorteilhaft ist eine Weiterbildung nach Anspruch 20, wodurch jedes einzelne Schalt-Modul einzeln gesteuert und überwacht werden kann.

Die im Anspruch 21 beschriebene Ausführungsvariante bewirkt eine Veränderbarkeit des Volumens eines Pneumatikzylinders, wodurch dieser flexibel eingesetzt und unterschiedlichen Bedingungen angepaßt werden kann.

Von Vorteil ist eine Weiterbildung nach Anspruch 22, wodurch eine exakte Überwachung und damit Steuerung der Bewegungseinheit ermöglicht wird.

Vorteilhaft ist aber auch eine Ausführungsvariante nach den Ansprüchen 22 und 23, wodurch eine exakte Positionierung eines Bauteils der Bewegungseinheit möglich wird, ohne daß eine zu große mechanische Belastung bei Abbremsen eines bewegten Teils auftritt.

Die Weiterbildung nach Anspruch 24 ermöglicht einen Dialog zwischen einer Bedienperson und der Steuereinrichtung, vorzugsweise unmittelbar an der Bewegungseinheit selbst.

Günstig ist aber auch eine Variante nach Anspruch 25, wodurch die Montage erleichtert und damit die Herstellungskosten wesentlich reduziert werden.

Vorteilhaft ist eine Weiterbildung nach Anspruch 26, welche die Störanfälligkeit bei der Übertragung von Energie oder Steuersignalen reduziert, sowie die Anzahl von Einzelteilen einer Bewegungseinheit vermindert, wodurch der modulare Aufbau weiter verbessert wird.

Möglich ist aber auch eine Fortbildung nach Anspruch 27, wodurch eine einfache Montage der Melde- und/oder Überwachungsorgane an der Bewegungseinheit ermöglicht wird und darüber hinaus eine flexible Anordnung derselben erreicht wird.

Die im Anspruch 28 beschriebene Ausführung hat den Vorteil, daß Informationen über eine zentrale Leitung weitergeleitet werden und damit der Verdrahtungsaufwand weiter reduziert wird.

Von Vorteil ist eine Ausführung nach Anspruch 29, wodurch auch ein einzelnes Meldeund/oder Überwachungsorgan überwacht und/oder programmiert werden kann, wodurch die Einsatzmöglichkeit derartiger Bewegungseinheiten durch die damit erreichten Flexibilität erweitert werden.

Vorteilhaft ist aber auch eine Ausführungsvariante nach Anspruch 30, durch welche ein manuelles Eingeben von Daten vermieden wird und diese automatisch erfaßt werden, wodurch insbesondere Taktzeiten einer aus mehreren Bewegungseinheiten aufgebauten Montageanlage reduziert werden.

Eine günstige Ausführungsform beschreibt Anspruch 31, durch die der Verdrahtungsaufwand weiter reduziert wird und auch größere Distanzen zur Informationsübermittlung überbrückt werden können, ohne daß die Störanfälligkeit des Informationsflusses vergrößert wird.

Durch die im Anspruch 32 beschriebene Ausführungsvariante ist es möglich, die Position von verschiedenen Teilen in einem Koordinatensystem zu erfassen und somit auch die relative Lage zweier Teile zueinander einfach bestimmbar ist.

Von Vorteil ist aber auch eine Variante nach Anspruch 33, durch welche die Bewegungsbahn eines beweglichen Elementes der Bewegungseinheit unmittelbar simuliert werden kann, ohne daß vorher aufwendige mathematische Berechnungen der Funktion der Bewegungsbahn erfolgen müssen.

Die Erfindung wird im nachfolgenden anhand der in den Zeichnungen dargestellten Ausführungsbeispiele näher erläutert.

Es zeigen:
- Fig. 1: eine erfindungsgemäße Bewegungseinheit, geschnitten, in der Stirnansicht;
- Fig. 2: einen Teilbereich der erfindungsgemäßen Bewegungseinheit 1, insbesondere eine Steuervorrichtung, in perspektivischer Darstellung;
- Fig. 3: einen Teilbereich der erfindungsgemäßen Bewegungseinheit, insbesondere eine Steuervorrichtung, in perspektivischer Darstellung;
- Fig. 4: eine weitere Ausführungsvariante der erfindungsgemäßen Bewegungseinheit, geschnitten, in der Draufsicht;
- Fig. 5: die erfindungsgemäße Bewegungseinheit, geschnitten, gemäß den Linien V - V in Fig. 4;
- Fig. 6: eine andere Ausführungsvariante der erfindungsgemäßen Bewegungseinheit, in der Stirnansicht;
- Fig. 7: ein Blockschaltbild einer Steuervorrichtung der erfindungsgemäßen Bewegungseinheit;
- Fig. 8: ein Schaltplan der Steuervorrichtung der erfindungsgemäßen Bewegungseinheit;
- Fig. 9: ein Weg-Zeit-Diagramm der erfindungsgemäßen Bewegungseinheit;
- Fig. 10: ein Ablaufschema des erfindungsgemäßen Verfahrens zum Betrieb einer erfindungsgemäßen Bewegungseinheit;
- Fig. 11: ein Ablaufschema des Verfahrens zum Betrieb einer erfindungsgemäßen Bewegungseinheit;
- Fig. 12: eine weitere Ausführungsvariante der erfindungsgemäßen Bewegungseinheit, geschnitten, in der Draufsicht;
- Fig. 13: die erfindungsgemäße Bewegungseinheit, geschnitten, gemäß den Linien XIII - XIII in Fig. 12.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale aus den gezeigten unterschiedlichen Ausführungsbeispielen für sich eigenständige, erfindungsgemäße Lösungen darstellen.

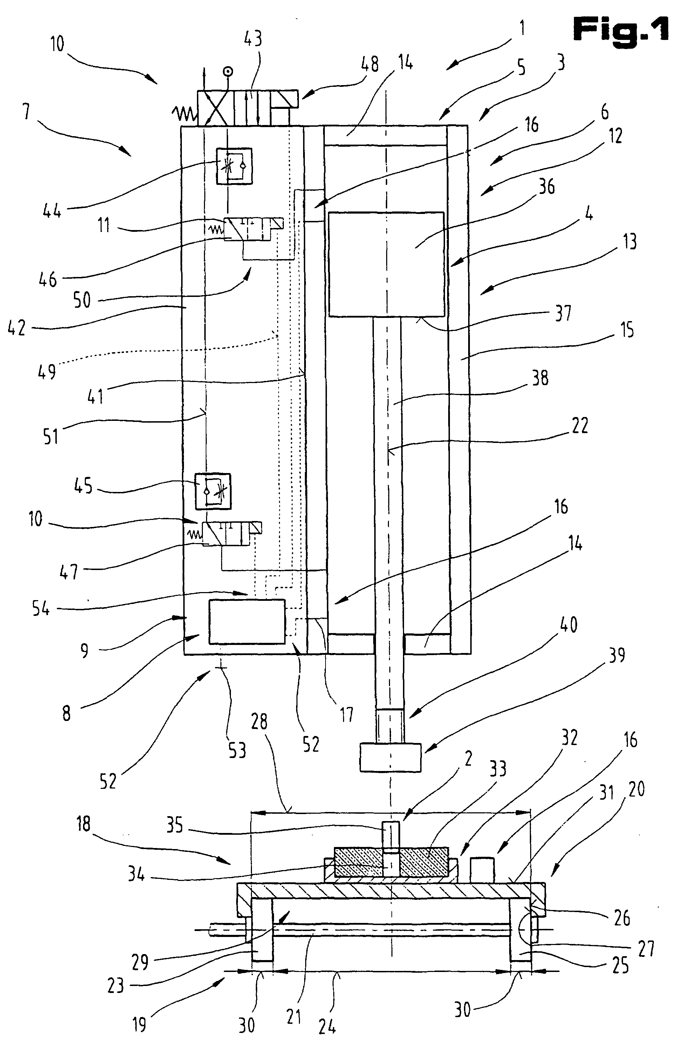

In der Fig. 1 ist eine Bewegungseinheit 1, beispielsweise für Bereitstellungs-, Handhabungs-, Füge- oder Kontrollsysteme einer Montageanlage für Montageteile 2 gezeigt. Diese weist relativ zueinander verstellbare Bauteile 3, 4 auf, welche über eine Antriebseinrichtung 5, beispielsweise mittels Druckluft, Strom oder Hydraulikflüssigkeit, verstellt werden können. Weiters besitzt die Bewegungseinheit 1 zumindest eine Führungsvorrichtung 6 für zumindest einen der Bauteile 3; 4. Die Bewegungseinheit 1 weist auch eine Steuereinrichtung 7 auf, wobei zumindest ein, eine Logikinformation und/oder eine Businformation und/oder einen Befehl verarbeitender Teil 8 der Steuereinrichtung 7 in der Antriebseinrichtung 5 und/oder zumindest in einem der Bauteile 3; 4 integriert und/oder auf einem Bauteil 3; 4 aufgebaut ist.

Die Steuereinrichtung 7 weist zumindest ein Steuer-Modul 9 und/oder ein oder mehrere dem Steuer-Modul 9 zugeordnete Schalt-Module 10 auf. Zumindest ein Schalt-Modul 10 der Steuereinrichtung 7 ist beispielsweise als Pneumatikventil 11 ausgebildet. Es kann aber auch als Relais oder als Schütz ausgebildet sein. Die Steuereinrichtung 7, insbesondere die Schalt-Module 10 sind mit der Antriebseinrichtung 5 verbunden, welche beispielsweise als Pneumatikantrieb 12, Hydraulikantrieb, Servomotorantrieb, Elektromotorantrieb, Handantrieb oder Piezoantrieb ausgebildet ist. Der Pneumatikantrieb 12 ist insbesondere als Pneumatikzylinder 13 ausgebildet. Dieser weist parallel zueinander angeordnete Abschlußelemente 14 auf. welche relativ zueinander verstellbar am oder in einem Zylinderrohr 15 gelagert sein können, womit das Volumen und der Verstellweg des Zylinders verändert werden können. Dieses Zylinderrohr 15 bildet im vorliegenden Ausführungsbeispiel die Führungsvorrichtung 6 aus. Im Bauteil 3, insbesondere im Zylinderrohr 15 angeordnet, befinden sich Melde- und/oder Überwachungsorgane 16, welche beispielsweise als Endschalter und/oder Näherungsschalter 17 und/oder als Wegmeßsystem und/oder Positionsermittlungssystem ausgebildet sind.

Zumindest ein Montageteil 2 befindet sich auf einer Transportvorrichtung 18, welche im vorliegenden Ausführungsbeispiel eine Antriebs- und/oder Führungsvorrichtung 19 und Werkstückträger 20 aufweist. Die Antriebs- und/oder Führungsvorrichtung 19 besteht beispielsweise aus Antriebsachsen 21, welche rechtwinkelig zur Transportrichtung und zu einer Mittelachse 22 des Pneumatikzylinders 13 verlaufen. Auf der Antriebsachse 21 ist ein bewegungsfest mit dieser verbundenes Antriebsrad 23 angeordnet, welches beispielsweise aus Kunststoff, aber auch aus Metall mit Kunststofflaufbelag gebildet sein kann. Vom Antriebsrad 23 um einen parallel zur Antriebsachse 21 gemessenen Abstand 24 distanziert befindet sich ein Führungsrad 25, welches beispielsweise nicht mit der Antriebsachse 21 bewegungsfest verbunden ist. Das Führungsrad 25, insbesondere eine Fläche 26 desselben wird beispielsweise mittels Federkraft an eine parallel zu dieser und rechtwinkelig zur Antriebsachse 21 verlaufende Flankenfläche 27 des Werkstückträgers 2() angepreßt, wobei ein parallel zum Abstand 24 gemessener Innenabstand 28 einer Ausnehmung 29 des Werkstückträgers 20 dem Abstand 24 zuzüglich einer doppelten Radbreite 30 entspricht.

Auf einer der Ausnehmung 29 abgewandten und der Bewegungseinheit 1 zugewandten Oberseite 31 des Werkstückträgers 20, welche rechtwinkelig zur Mittelachse 22 verläuft, befindet sich beispielsweise eine mit der Oberseite 31 lösbar oder unlösbar verbundene Aufnahme 32, in welcher ein Montageteil 2 angeordnet ist. Dieser ist beispielsweise als Rolle 33 aus Kunststoff ausgebildet, welche eine zylindrische Bohrung 34 besitzt, in der ein ebenfalls einen Montageteil 2 bildender Bolzen 35 eingepreßt werden soll. Selbstverständlich ist der Einsatz einer derartigen Bewegungseinheit 1 nicht nur auf Transportvorrichtungen 18 mit Werkstückträgern 20 bzw. auf die beschriebenen Montageteile 2 beschränkt.

Der Pneumatikzylinder 13 besitzt einen den Bauteil 4 bildenden Kolben 36, der eine rechtwinkelig zur Mittelachse 22 verlaufende Kolbenfläche 37 besitzt, welche von einer Kolbenstange 38 überragt wird. In einem der Kolbenfläche 37 abgewandten Endbereich der Kolbenstange 38 besitzt diese im vorliegenden Ausführungsbeispiel ein Druckstück 39, welches beispielsweise auf die Kolbenstange 38, insbesondere auf einen Gewindeabschnitt 40 desselben aufgeschraubt ist. Somit dient die Bewegungseinheit 1 im vorliegenden Ausführungsbeispiel als Fügesystem, insbesondere als Preßvorrichtung für Montageteile.

An einer Außenfläche 41 des Zylinderrohres 15 befindet sich die Steuereinrichtung 7, welche beispielsweise auf einer mit der Außenfläche 41 lösbar oder unlösbar verbundenen Konsole 42 aufgebaut ist. Die Schalt-Module 10 sind dabei vorzugsweise lösbar mit der Konsole 42 verbunden und werden durch beispielsweise ein 4/2-Wege-Ventil 43, zwei Drosselrückschlagventile 44, 45 und zwei 3/2-Wege-Ventile 46, 47 gebildet. Die Schalt-Module 10 besitzen beispielsweise elektrisch betätigte Antriebe 48, welche über strichliert dargestellte Steuerleitungen 49 mit dem Steuer-Modul 9 leitungsverbunden sind. Selbstverständlich ist es möglich, die Steuerleitungen 49 nicht nur als lose, d.h. flexible Leitungen auszugestalten, sondern in eine noch zu beschreibende elektrische Verteilerleiste bzw. in einem Kabelkanal zu integrieren. Die Schalt-Module 10 sind entsprechend der Schaltungsfunktion beispielsweise über Leitungen 50, insbesondere Pneumatikschläuche 51 verbunden. Die Steuereinrichtung 7, insbesondere das Steuermodul 9 besitzt Eingänge 52, beispielsweise für Signale und/oder Befehle einer zentralen Kontrolleinheit und/oder der Melde- und/oder Überwachungsorgane 16 und/oder für Signale und/oder Befehle einer weiteren Steuereinrichtung 7 weiterer Bewegungseinheiten 1 und/oder externer Ein- und/oder Ausgabevorrichtungen und/oder von Antriebseinrichtungen 5 und/oder von Energie und/oder von Schalt-Modulen 10, wobei die Eingänge 52 beispielsweise über Einfachstecker mit Einzelleitungen verbunden sind, welche jedoch mit den Eingängen 52 auch unlösbar verbunden werden können.

Die Eingänge 52 können weiters über zumindest einen Mehrfachstecker mit zumindest einer Mehrfachleitung verbunden und/oder über einen Busstecker 53 mit einer zentralen Verbindungsleitung verbunden sein. Die Steuereinrichtung 7, insbesondere das Steuer-Modul 9 kann auch Ausgänge 54 aufweisen, welche beispielsweise den Austritt von Signalen und/oder Befehlen an die zentrale Kontrolleinheit und/oder an die Schalt-Module 10 ermöglichen. Darüber hinaus können noch Ausgänge 54, beispielsweise für Signale und/oder Befehle an die Melde- und/oder Überwachungsorgane 16 und/oder an Steuereinrichtungen 7 weiterer Bewegungseinheiten 1 und/oder an externe Einund/oder Ausgabevorrichtungen und/oder an Antriebseinrichtungen 5 und/oder für Energie dienen. Der Austritt von Signalen und/oder Befehlen kann über den Busstecker 53, welcher auch einen Eingang 52 bildet, erfolgen.

Die Ausgänge 54 können ebenso wie die Eingänge 52 über Einfachstecker mit Einzelleitungen und/oder über den oder einen weiteren Mehrfachstecker mit der oder einer weiteren Mehrfachleitung und/oder über den oder einen weiteren Busstecker 53 mit der oder einer weiteren zentralen Verbindungsleitung verbunden sein.

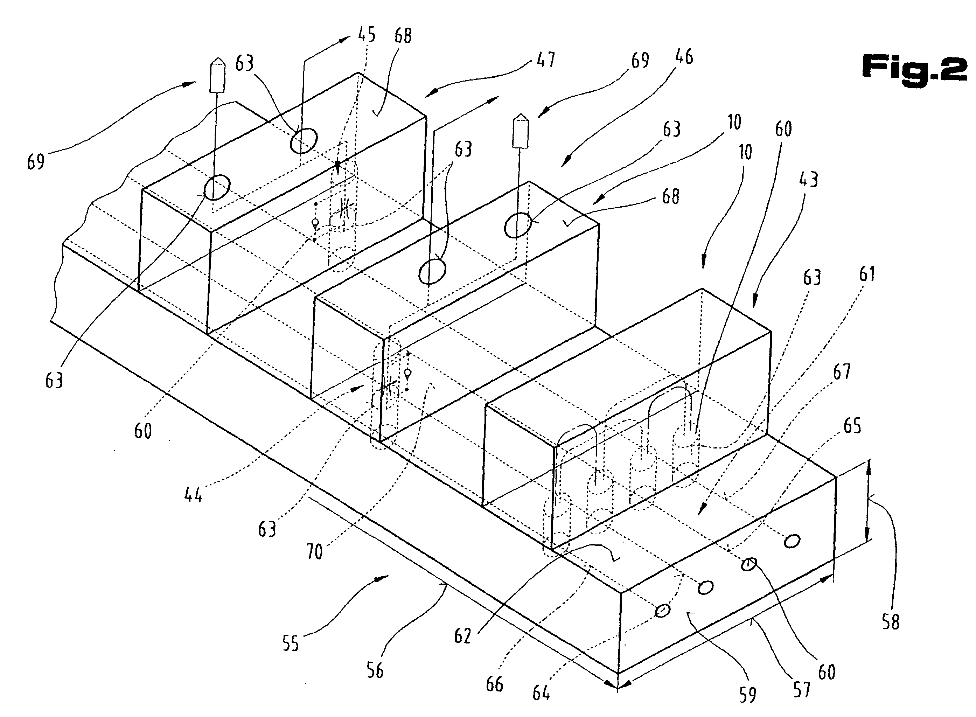

Wie in Fig. 2 dargestellt, können die in Fig. 1 gezeigten Leitungen 50, insbesondere die Pneumatikschläuche 51 durch eine pneumatische Verteilerleiste 55 ersetzt oder ergänzt werden. Die Verteilerleiste 55 weist eine Leistenlänge 56 und eine rechtwinkelig zu dieser gemessene Leistenbreite 57 auf, welche mit einer rechtwinkelig zur Leistenbreite 57 gemessenen Leistenhöhe 58 eine Stirnfläche 59 begrenzt. In dieser sind Öffnungen 60 für Kanäle 61 angeordnet, welche sich beispielsweise über die gesamte Leistenlänge 56 erstrecken und parallel zu dieser und parallel zueinander verlaufen.

Auf einer rechtwinkelig zur Stirnfläche 59 verlaufenden und durch die Leistenlänge 56 und die Leistenbreite 57 umgrenzten Oberseite 62 befinden sich ebenfalls Öffnungen 60, vorzugsweise für die Schalt-Module 10. So sind beispielsweise für das der Stirnfläche 59 benachbarte 4/2-Wege-Ventil 43 an der Oberseite 62 vier Öffnungen 60 angeordnet und mit korrespondierenden Öffnungen 63 der Schalt-Module 10 verbunden. Die Kanäle 61 werden beispielsweise gebildet durch einen Zuluftkanal 64, einen Abluftkanal 65 und zwei Verbindungskanäle 66, 67. Jeweils eine Öffnung 63 des 4/2-Wege-Ventils 43 ist mit einem Kanal 61 beispielsweise über einen Stecker verbunden. Vom 4/2-Wege-Ventil 43 in entgegengesetzter Richtung zur Stirnfläche 59 beabstandet befindet sich das 3/2-Wege-Ventil 46. Dieses besitzt ebenfalls Öffnungen 63, von denen eine mit dem Verbindungskanal 66 vorzugsweise lösbar verbunden ist und in der das Drosselrückschlagventil 44 angeordnet ist. Der Oberseite 62 der pneumatischen Verteilerleiste 55 abgewandt und parallel zu dieser verlaufend, wird das 3/2-Wege-Ventil 46 durch eine Oberseite 68 begrenzt, welche zwei Öffnungen 63 aufweist, wobei eine Öffnung 63 beispielsweise einen Schalldämpfer 69 aufweist, wohingegen die andere Öffnung 63 mit dem in Fig. 1 dargestellten Pneumatikzylinder 13 verbunden ist. Die letztgenannten Öffnungen 63 können jedoch auch an der der Oberseite 62 zugewandten und der Oberseite 68 abgewandten Unterseite 70 des 3/2-Wege-Ventils 46 angeordnet sein, wodurch in der pneumatischen Verteilerleiste 55 weitere Kanäle 61 erforderlich wären.

Vom 3/2-Wege-Ventil 46 in entgegengesetzter Richtung zum 4/2-Wege-Ventil 43 beabstandet befindet sich das 3/2-Wege-Ventil 47, welches mit einer Öffnung 63 über eine in der Oberseite 62 der Verteilerleiste 55 angeordnete Öffnung 60 mit dem Verbindungskanal 67 verbunden ist. Von der Öffnung 63 erstreckt sich beispielsweise innerhalb des 3/2-Wege-Ventils 47 ein Drosselrückschlagventil 45. Ebenfalls an der Oberseite 68 des 3/2-Wege-Ventils 47 befinden sich Öffnungen 63, wobei wiederum eine Öffnung 63 einen Schalldämpfer 69 aufweist, wogegen die andere Öffnung 63 mit dem in Fig. 1 dargestellten Pneumatikzylinder 13 verbunden ist. Eine derartige Konfiguration bzw. Verbindung von Schalt-Modulen 10 dient vorzugsweise einer noch näher zu erläuternden Endlagendämpfung eines Pneumatikzylinders 13.

Selbstverständlich kann auf diese Art und Weise jede beliebige Anordnung von Schalt-Modulen 10 und damit eine Realisierung von unterschiedlichsten Steuerungen erreicht werden. Dem entsprechend sind die Anzahl der in der pneumatischen Verteilerleiste 55 angeordneten Kanäle 61 und die auf der pneumatischen Verteilerleiste 55 angeordneten Schalt-Module 10 beliebig variierbar. Auch ist es möglich, die Schalt-Module 10 in die pneumatische Verteilerleiste 55 zu integrieren, und nicht, wie beispielhaft dargestellt, an deren Oberseite 62 lösbar oder unlösbar anzuordnen. Auch können die Schalt-Module 10 anstelle der Anordnung auf einer pneumatischen Verteilerleiste 55 auch am oder im Zylinderrohr 15 angeordnet sein. Insbesondere kann auch zumindest ein Bauteil 3; 4 eine pneumatische Verteilerleiste 55 aufweisen.

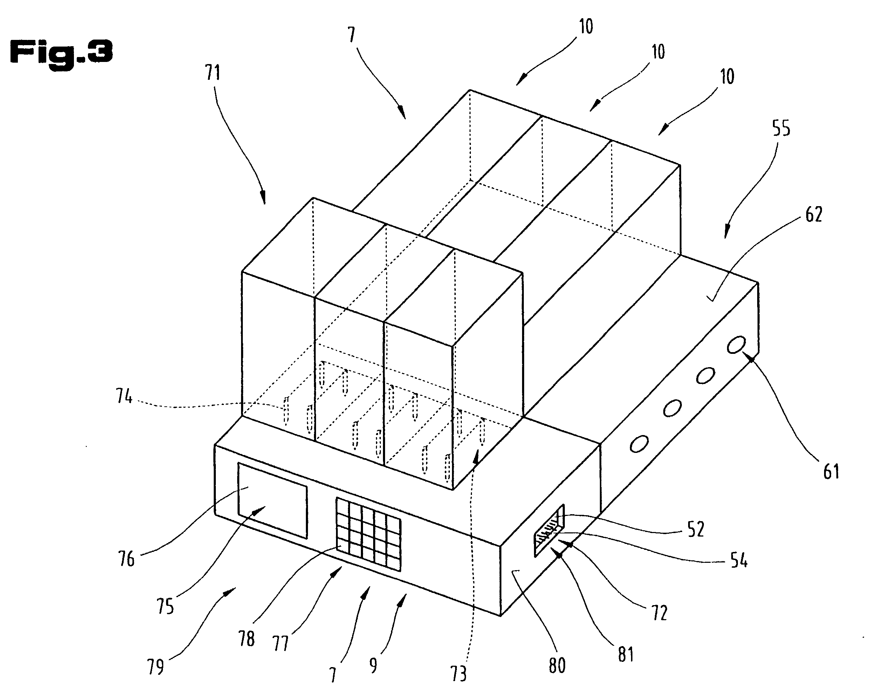

In der Fig. 3 ist eine Weiterbildung der Steuereinrichtung 7 in perspektivischer Darstellung gezeigt. Diese besitzt beispielsweise - wie zu Fig. 2 beschrieben - eine pneumatische Verteilerleiste 55, welche wiederum Kanäle 61 besitzt und auf deren Oberseite 62 mehrere Schalt-Module 10 angeordnet sind. Die Schalt-Module 10 weisen Antriebe 71 auf, welche lösbar oder unlösbar mit dem Schalt-Modul 10 oder mit einer elektrischen Verteilerschiene 72 vorzugsweise über als Kupplungsvorrichtungen 73 ausgebildete Stecker 74 verbunden sind. Im vorliegenden Ausführungsbeispiel ist die elektrische Verteilerschiene 72 ein Teil der Steuereinrichtung 7. Es ist jedoch auch möglich, zwischen der elektrischen Verteilerschiene 72 und der Steuereinrichtung 7 eine flexible Verbindung herzustellen. Auch darf die elektrische Verteilerschiene 72 nicht nur als starre Leitungsverbindung verstanden werden, sondern sie kann auch durch vorzugsweise in einem Gehäuse verlaufende flexible Einzelleitungen gebildet werden.

Die Steuereinrichtung 7, insbesondere das Steuer-Modul 9 weist im vorliegenden Ausführungsbeispiel zumindest ein Anzeigeelement 75 auf, welches beispielsweise als Display 76 mit Klartextanzeige, Nummernanzeige, Leuchtdioden und/oder akustischen Informationselementen ausgebildet ist. Weiters kann die Steuereinrichtung 7 eine Eingabevorrichtung 77, vorzugsweise in Form einer Tastatur 78 besitzen. Diese kann jedoch auch durch einen Touch-Screen gebildet werden, welcher die Eingabevorrichtung 77 mit dem Display 76 kombiniert. Das Anzeigeelement 75 bildet dabei gemeinsam mit der Eingabevorrichtung 77 eine Ein- und/oder Ausgabevorrichtung 79. Die elektrische Verteilerschiene 72 und/oder die Steuereinrichtung 7 weisen an einer Stirnseitenfläche 80 beispielsweise einen als Eingang 52 und/oder als Ausgang 54 ausgebildeten Mehrfachstecker 81 auf. Es ist jedoch auch ein in Fig. 1 beschriebener Busstecker 53 einsetzbar.

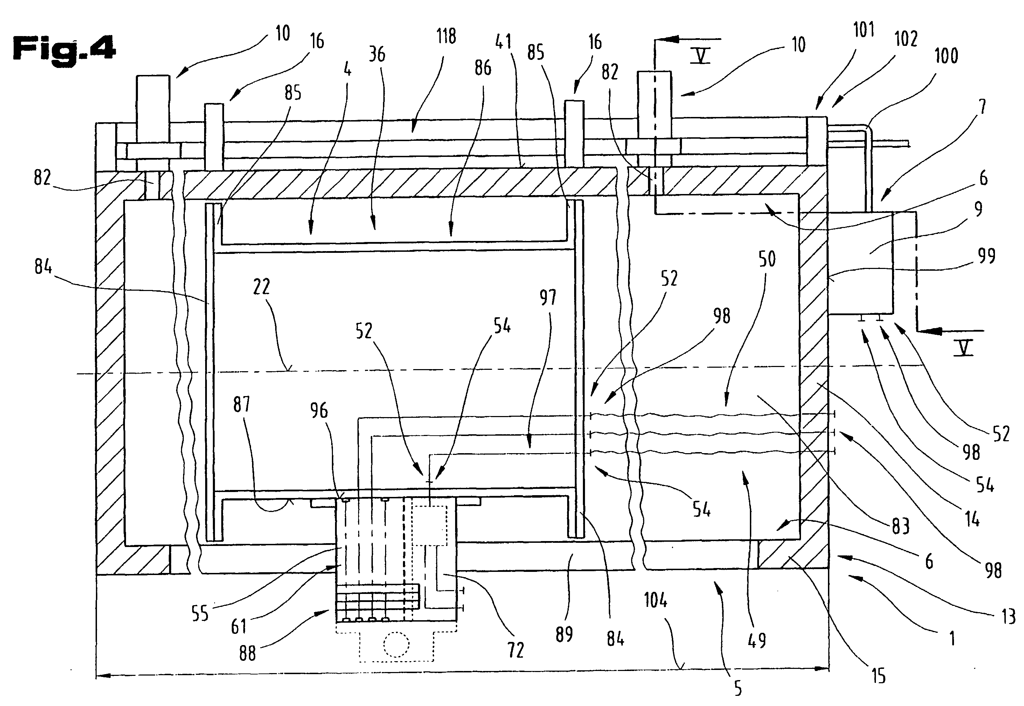

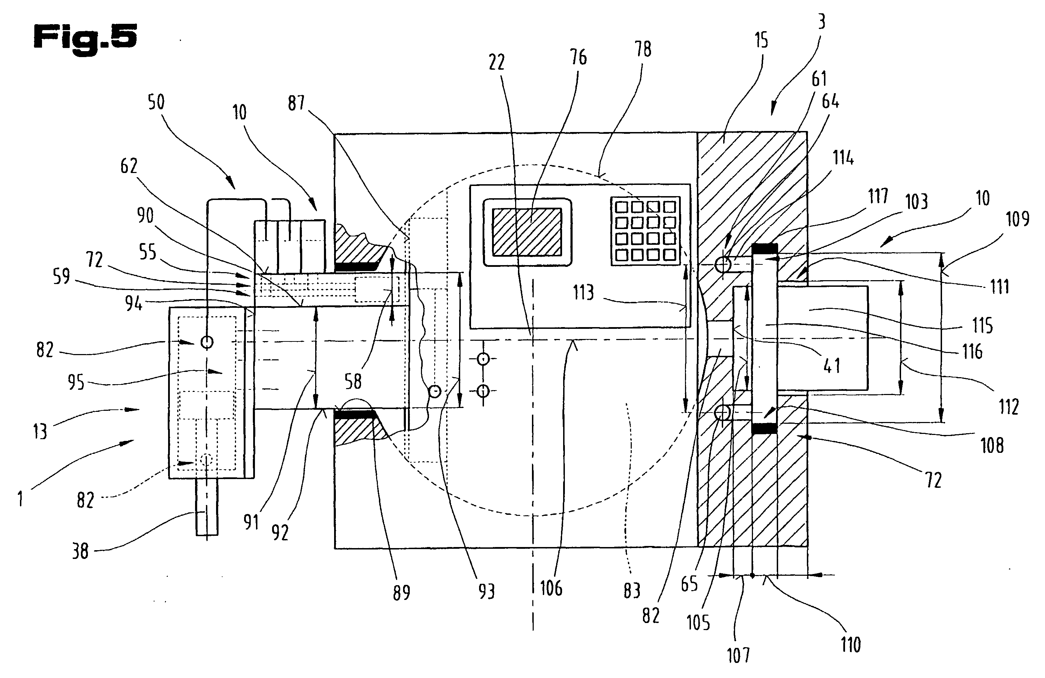

In den gemeinsam beschriebenen Fig. 4 und 5 ist eine weitere Ausführungsvariante einer erfindungsgemäßen Bewegungseinheit 1 gezeigt. Diese besteht aus der Antriebseinrichtung 5, welche im vorliegenden Ausführungsbeispiel als kolbenstangenloser Pneumatikzylinder 13 ausgebildet ist. Der kolbenstangenlose Pneumatikzylinder 13 besteht wiederum aus einem Zylinderrohr 15, welches Anschlußöffnungen 82 aufweist, die von der Außenfläche 41 des Zylinderrohres 15 bis zu einem Zylinderinnenraum 83 ragen. Das Zylinderrohr 15 dient wiederum als Führungsvorrichtung 6 für den Kolben 36. Dieser ist beispielsweise in Hohlbauweise ausgeführt und weist zwei parallel zueinander und rechtwinkelig zur Mittelachse 22 verlaufende Kolbenplatten 84 auf, welche mit parallel zu diesen verlaufenden Flanschen 85 lösbar oder unlösbar verbunden sind.

Die Flansche 85 sind Bestandteil eines Kolbenkörpers 86, welcher beispielsweise einen rechteckigen Querschnitt in einer rechtwinkelig zur Mittelachse 22 verlaufenden Ebene aufweist. Die Flansche 85 und die Kolbenplatten 84 sind in ihrer Umrißform dem Querschnitt des Zylinderinnenraums 83 angepaßt und beispielsweise kreisförmig, d.h. konzentrisch um die Mittelachse 22 verlaufend, gestaltet. Eine den Kolbenkörper 86 begrenzende bzw. parallel zur Mittelachse 22 verlaufende Außenfläche 87 dient der Aufnahme eines Schlittens 88, welcher eine im Zylinderrohr 15 angeordnete schlitzförmige Längsöffnung 89 durchragt. Der Schlitten 88 weist eine pneumatische Verteilerleiste 55 auf, welche auf einer rechtwinkelig zur Außenfläche 87 verlaufenden Oberseite 90 des Schlittens 88 lösbar oder unlösbar befestigt ist. Der Schlitten 88 weist eine parallel zur Außenfläche 87 gemessene Schlittenhöhe 91 auf, welche die Oberseite 90 von einer parallel zu dieser verlaufenden Unterseite 92 des Schlittens 88 distanziert. Eine parallel zur Schlittenhöhe 91 gemessene Schlitzhöhe 93 der Längsöffnung 89 ist größer als die Schlittenhöhe 91 addiert um die Leistenhöhe 58 der pneumatischen Verteilerleiste 55. An der Oberseite 62 der Verteilerleiste 55 bzw. der elektrischen Verteilerschiene 72, welche ebenfalls an der Oberseite 90 des Schlittens 88 angeordnet sein kann, befinden sich die Schalt-Module 10. Von den Schalt-Modulen 10 verlaufen Leitungen 50 zu Anschlußöffnungen 82 einer weiteren Bewegungseinheit 1, welche ebenfalls beispielsweise als Pneumatikzylinder 13, jedoch mit Kolbenstange 38, ausgebildet ist.

Der Schlitten 88 wird in entgegengesetzter Richtung zur Außenfläche 87 des Kolbenkörpers 86 und damit des Bauteils 4 von einer Stirnfläche 94 begrenzt, welche eine mechanische Schnittstelle 95 für weitere Bewegungseinheiten 1 und/oder Montageund/oder Bearbeitungsvorrichtungen und/oder für Energie und/oder für Steuereinrichtungen 7 aufweist. Anstelle der Leitungen 50 kann nun diese mechanische Schnittstelle 95 so ausgebildet sein, daß die Stirnfläche 94 bzw. die Stirnfläche 59 der pneumatischen Verteilerleiste 55 nicht dargestellte Öffnungen aufweist, welche mit ebenfalls nicht dargestellten Öffnungen in der weiteren Bewegungseinheit 1 korrespondieren. Auch ist es möglich, anstelle einer eigenen pneumatischen Verteilerleiste 55 den Schlitten 88 mit integrierten Kanälen 61 auszubilden.

An einer parallel zur Stirnfläche 94 und dieser abgewandt verlaufenden Innenstirnfläche 96 des Schlittens 88 bzw. der pneumatischen Verteilerleiste 55 und/oder der elektrischen Verteilerschiene 72 befinden sich Eingänge 52 und/oder Ausgänge 54, welche im vorliegenden Ausführungsbeispiel in Form einer Busleitung 97 zusammengefaßt sind. Es ist jedoch auch möglich, anstelle der Busleitung 97 eine Mehrfachleitung oder Einzelleitungen zu verwenden. Die Busleitung 97 kann flexibel oder starr ausgeführt sein und verläuft bis zur Kolbenplatte 84, welche der Steuereinrichtung 7 für den kolbenstangenlosen Pneumatikzylinder 13 zugewandt ist. In dieser Kolbenplatte 84 befinden sich Eingänge 52 und/oder Ausgänge 54, welche beispielsweise als Kupplungsvorrichtungen 98 ausgebildet sind. Von diesen Kupplungsvorrichtungen 98 erstrecken sich bis zum benachbarten Abschlußelement 14 des kolbenstangenlosen Pneumatikzylinders 13 eine oder mehrere Steuerleitungen 49 und/oder eine oder mehrere Leitungen 50, welche längenveränderbar, beispielsweise in Form von Spiralleitungen, ausgebildet sind.

An einer dem Kolben 36 abgewandten Außenfläche 99 des Abschlußelementes 14 befinden sich Kupplungsvorrichtungen 98, welche den Steuerleitungen 49 und/oder den Leitungen 50 zugeordnet sind.

An der Außenfläche 99 ist weiters die Steuereinrichtung 7 angeordnet. Diese weist wiederum ein Display 76 und/oder eine Tastatur 78 auf. Die Steuereinrichtung 7, insbesondere das Steuer-Modul 9, besitzt Eingänge 52 und/oder Ausgänge 54, welche ebenfalls als Kupplungsvorrichtungen 98 ausgebildet sein können und der Übermittlung von Signalen und/oder Befehlen, beispielsweise an eine zentrale Kontrolleinheit dienen. Diese Übermittlung ist jedoch nicht notwendigerweise nur mittels Leitungen 50 bzw. Steuerleitungen 49 möglich sondern kann auch beispielsweise optisch mittels Laser oder beispielsweise mittels Infrarot oder Ultraschall erfolgen. Vom Steuer-Modul 9 erstreckt sich beispielsweise eine ASIC-Busleitung 100, welche die Schalt-Module 10 bzw. die Melde- und/oder Überwachungsorgane 16 mit Energie und/oder Daten versorgt bzw. Daten von diesen weiterleitet. Die ASIC-Busleitung 100 ist dabei vorzugsweise zweipolig ausgebildet. Über eine Schnittstelle 101 und/oder über eine Auswerteeinheit 102 werden die vom Steuer-Modul 9 und/oder von der zentralen Kontrolleinheit kommenden und über die ASIC-Busleitung 100 übertragenen Signale und/oder Befehle auf eine elektrische Verteilerschiene 72 übertragen, welche in einer Führungsvorrichtung 103 angeordnet ist.

Die Führungsvorrichtung 103 ist vorzugsweise im Zylinderrohr 15 angeordnet und erstreckt sich beispielsweise zumindest über einen Teilbereich einer Länge 104 der Antriebseinrichtung 5. Sie ist dabei so ausgebildet, daß sie nutförmig die Außenfläche 41 des Zylinderrohres 15 in entgegengesetzter Richtung zum Kolben 36 überragt. Im Bereich der Außenfläche 41 weist sie eine Schlitzbreite 105 auf, welche symmetrisch um eine durch die Mittelachse 22 verlaufende Mittelebene 106 angeordnet ist. In einer von der Außenfläche 41 in entgegengesetzter Richtung zum Kolben 36 gemessenen Tiefe 107 weist die Führungsvorrichtung 103 eine Nut 108 auf, welche eine parallel zur Schlitzbreite 105 und rechtwinkelig zur Mittelebene 106 symmetrisch um diese angeordnete Nutbreite 109 besitzt, welche größer ist als die Schlitzbreite 105. Die Nut 108 besitzt eine im Anschluß an die Tiefe 107 in entgegengesetzter Richtung zum Kolben 36 gemessene Nuthöhe 110. Im Anschluß an die Nuthöhe 110 weist die Führungsvorrichtung 103 noch eine Vertiefungsnut 111 auf, welche eine Nutbreite 112 besitzt, die parallel zur Nutbreite 109 gemessen ist und kleiner ist als diese.

Das Zylinderrohr 15 besitzt weiters von der Außenfläche 41 in Richtung zum Zylinderinnenraum 83 ragende Anschlußöffnungen 82. Symmetrisch um die Mittelebene 106 in einem Bohrungsabstand 113 voneinander distanziert verlaufen im Zylinderrohr 15 beispielsweise die Kanäle 61, insbesondere ein Zuluftkanal 64 und ein Abluftkanal 65. Von diesen reichen Verbindungskanäle 114 bis zur Nut 108 und verlaufen rechtwinkelig zur Außenfläche 41.

In die Führungsvorrichtung 103 sind Schalt-Module 10 eingeführt, welche im vorliegenden Ausführungsbeispiel als Ventilpatronen 115 ausgebildet sind. Diese Schalt-Module 10 besitzen beispielsweise einen Bund 116, welcher Kontaktelemente 117 besitzt, die mit der elektrischen Verteilerschiene 72 in Berührungsverbindung stehen. Die elektrische Verteilerschiene 72, die im vorliegenden Ausführungsbeispiel als Leiterbahn ausgebildet ist, kann jedoch auch in Form von im Bauteil 3, d.h. im Zylinderrohr 15 integrierte Leitungen gebildet sein. Darüber hinaus ist es auch möglich, daß das Schalt-Modul 10, insbesondere die Ventilpatrone 115, ein eigenes Steuer-Modul 9 aufweist, welches entweder zusätzlich zum am Abschlußelement 14 angeordneten Steuer-Modul 9 vorhanden ist oder dieses ersetzt.

Die Führungsvorrichtung 103 bildet weiters eine schienenförmige Befestigungsvorrichtung 118 für die Melde- und/oder Überwachungsorgane 16 aus. Auch diese können Steuer-Module 9 aufweisen. Weiters ist es möglich, die Führungsvorrichtung 103 nicht in die Antriebseinrichtung 5, d.h. in das Zylinderrohr 15 zu integrieren, sondern als eigenen Bauteil auszubilden, welcher lösbar oder unlösbar mit der Antriebseinrichtung 5, insbesondere mit dem Zylinderrohr 15, befestigt ist. Dabei kann die Führungsvorrichtung 103 mehrere, in vorbestimmten Abständen in Richtung der Länge 104 angeordnete Anschlußöffnungen aufweisen, von denen zumindest eine mit im Zylinderrohr 15, d.h. in der Antriebseinrichtung 5 angeordneten Anschlußöffnungen 82 korrespondiert. Dadurch ist es möglich, die Führungsvorrichtung 103 für einen modularen Aufbau der Bewegungseinheit 1 auszubilden.

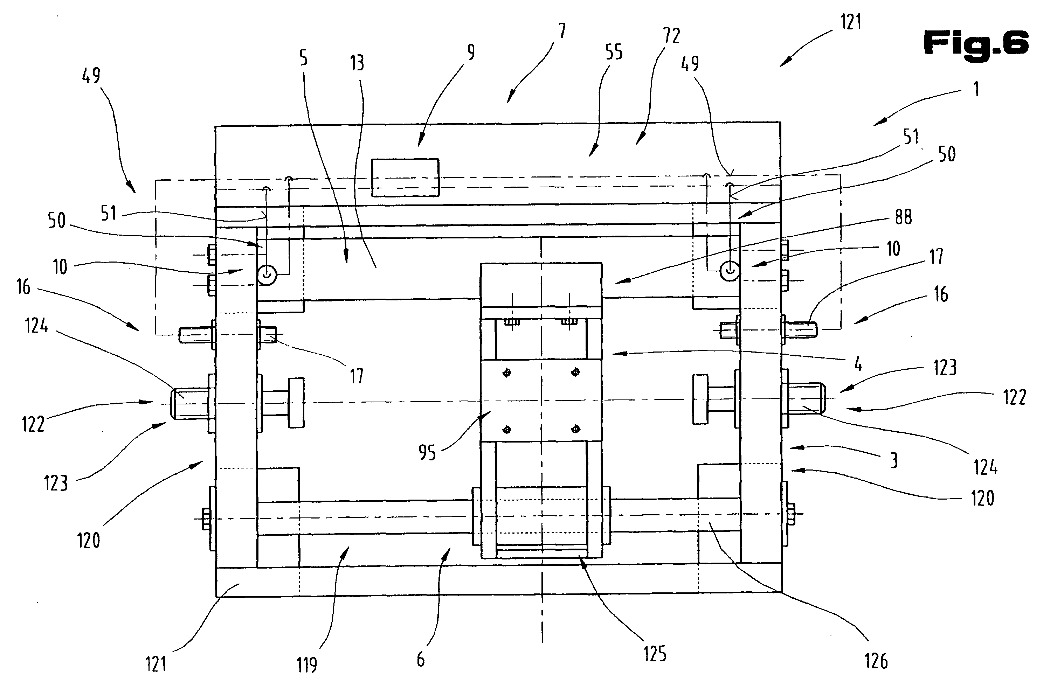

In der Fig. 6 ist eine weitere Ausführungsvariante einer erfindungsgemäßen Bewegungseinheit 1 dargestellt. Diese weist relativ zueinander verstellbare Bauteile 3, 4 auf, wobei der Bauteil 4 über eine beispielsweise als Linearführung 119 ausgebildete Führungsvorrichtung 6 am vorzugsweise rahmenförmig ausgebildeten Bauteil 3 relativbeweglich angeordnet ist. Die Führungsvorrichtung 6 kann jedoch auch beispielsweise als Dreh- und/oder Getriebeführung oder als Kulissenbahn ausgebildet sein. Der rahmenförmige Bauteil 3 besitzt beispielsweise zwei parallel zueinander verlaufende Verbindungselemente 120, welche durch rechtwinkelig zu diesen und parallel zueinander verlaufenden Längselementen 121 beabstandet sind. Die Verbindungselemente 120 dienen der Aufnahme von Feststellvorrichtungen 122, welche beispielsweise durch eine Dämpfungsvorrichtung 123, insbesondere einen Stoßdämpfer 124, gebildet sind. Dadurch wird der Bauteil 4 in zumindest einer Bewegungsrichtung am Bauteil 3 lagebegrenzt. Ebenfalls in den Verbindungselementen 120 angeordnet befinden sich Meldeund/oder Überwachungsorgane 16, welche beispielsweise in Form von kapazitiven Näherungsschaltern 17 ausgebildet sind.

Die Führungsvorrichtung 6 ist beispielsweise als Kugelbuchsenführung ausgebildet, wobei der Bauteil 4 zumindest eine Kugelbuchse 125 aufweist, in welche eine Führungswelle 126 eingeführt ist, die am Bauteil 3 bewegungsfest angeordnet ist. Ein Längselement 121 besteht beispielsweise aus der Antriebseinrichtung 5, welche im vorliegenden Ausführungsbeispiel ebenfalls als Pneumatikzylinder 13 ausgebildet ist.

Dieser Pneumatikzylinder 13 ist als Linearzylinder ausgebildet und besitzt den Schlitten 88, an dem der Bauteil 4 bewegungsfest angeordnet ist. Dieser weist wiederum die Schnittstelle 95 auf, an der beispielsweise eine nicht dargestellte weitere Bewegungseinheit 1 angeordnet sein kann und in dessen Bereich ebenfalls nicht dargestellte Eingänge 52 und/oder Ausgänge 54 einer Steuereinrichtung 7 angeordnet sein können, welche über Steckerverbindungen mit einer Steuereinrichtung 7 einer nicht dargestellten weiteren Bewegungseinheit 1 leitungsverbunden sein können. In der Antriebseinrichtung 5 oder im Bauteil 4 integriert befindet sich die pneumatische Verteilerleiste 55 und/oder die elektrische Verteilerschiene 72 mit dem Steuer-Modul 9. Die elektrische Verteilerschiene 72 ist über strichpunktiert dargestellte Steuerleitungen 49 mit den Melde- und/oder Überwachungsorganen 16 und die pneumatischen Verteilerleiste 55 über Leitungen 50, beispielsweise Pneumatikschläuche 51, mit den Schalt-Modulen 10 verbunden.

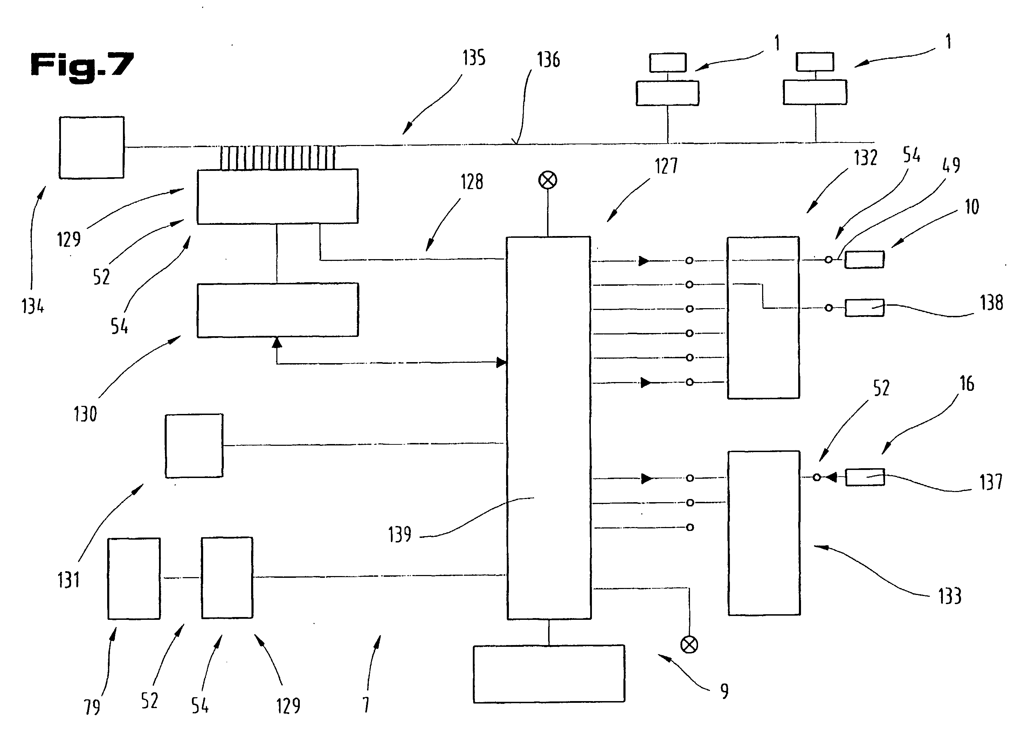

Wie in den gemeinsam beschriebenen Fig. 7 bis 9 ersichtlich, wird das Steuer-Modul 9 beispielsweise durch einen Mikroprozessor 127 gebildet, welcher über Steuerleitungen 49 bildende Leiterbahnen 128 mit einer einen Eingang 52 und/oder Ausgang 54 bildenden Schnittstelle 129 verbunden ist. Diese weist eine integrierte oder, wie dargestellt, eine externe Auswerteeinheit 130 auf, welche ebenfalls mit dem Mikroprozessor 127 verbunden ist. Weiters ist ein Speicher 131 zur Abspeicherung, insbesondere von Einzelbewegungen und ein als externe Schnittstelle 129 für externe Ein- und/oder Ausgabevorrichtungen 79 ausgebildeter Eingang 52 und/oder Ausgang 54 mit dem Mikroprozessor 127 verbunden. Darüber hinaus kann der Mikroprozessor 127 noch mit einem Treiber 132 verbunden sein, welcher zwischen Ausgängen 54 und dem Mikroprozessor 127 angeordnet ist, und mit einem D/A-Wandler 133 verbunden sein, welcher zwischen Eingängen 52, insbesondere für Meßorgane und/oder Meldeund/oder Überwachungsorgane 16 und dem Mikroprozessor 127, angeordnet ist. Der Mikroprozessor 127 ist so ausgebildet, daß er eine oder mehrere der folgende Funktionen parallel oder seriell wahrnimmt:
- Initialisierungsmodus
- Steuerungsmodus
- Lernmodus
- Überwachungsmodus

Selbstverständlich ist es möglich, für jede dieser Funktionen einen eigenen Mikroprozessor 127 vorzusehen, diese Funktionen mittels konventioneller Steuerung zu verwirklichen oder sie in einer zentralen Kontrolleinheit 134 zu realisieren.

Der Initialisierungsmodus hat das Ziel, daß bei Herstellung der Verbindung zwischen dem Steuer-Modul 9 und der Kontrolleinheit 134 letzteren die Basisparameter des Steuer-Moduls 9 bzw. der Bewegungseinheit 1 übermittelt werden. Diese können beispielsweise in Form eines Programms übermittelt werden, welches die potentiellen Soll-Werte der Bewegungseinheiten 1, insbesondere des Pneumatikzylinders 13, an eine externe Ein- und/oder Ausgabevorrichtung 79 oder auf einem Bildschirm der Kontrolleinheit 134 aufscheinen läßt. Diese potentiellen Soll-Werte wie beispielsweise Verfahrwege in x-, y-Richtung, Geschwindigkeiten, Kräfte können daher im Speicher 131 hinterlegt werden. Die Bedienperson kann nun die tatsächlichen, d.h. aktuellen Soll-Werte, beispielsweise den Weg, die Beschleunigung, die Verzögerung des Kolbens 36 des Pneumatikzylinders 13, entsprechend der individuellen Bewegungssituation festlegen. Dies kann beispielsweise derart durchgeführt werden, daß über die Einund/oder Ausgabevorrichtung 79 oder über die Kontrolleinheit 134, die potentiellen Soll-Werte als variable Größen sichtbar gemacht werden, welche durch die Bedienperson mit dem entsprechenden aktuellen Soll-Werten versehen werden können. Überschreitet der von der Bedienperson eingegebene aktuelle Soll-Wert den hinterlegten potentiellen Soll-Wert, so kann beispielsweise eine Warnung an die Bedienperson erfolgen.

Eine derartige Initialisierung einer Bewegungseinheit 1 kann jedoch auch mittels Datenhandschuh und Simulation der Bewegungseinheit 1 unmittelbar am Steuer-Modul 9 erfolgen. Dabei vollführt die Bedienperson mit dem Datenhandschuh die konkret auszuführende Bewegung unmittelbar in der betreffenden Montagestation. Die Bewegungseinheit 1 vollführt diese Bewegungen des Datenhandschuhs vorzugsweise simultan und übermittelt die, durch Meßorgane und/oder die Melde- und/oder Überwachungsorgane 16 ermittelten Werte, beispielsweise x- und y-Komponenten, an den Mikroprozessor 127 und/oder an die Kontrolleinheit 134, wobei der Datenhandschuh über Eingänge 52 und/oder Ausgänge 54 mit der Steuereinrichtung 7 und/oder der Kontrolleinheit 134 vorzugsweise kuppelbar verbunden ist und die Bewegungsdaten an diese weiterleitet. Diese errechnen daraus eine Funktion der Bewegung und speichern sie als Programm ab. Insbesondere durch die Verwendung eines Datenhandschuhs als Ein- und/oder Ausgabevorrichtung 79 kann der erforderliche Programmieraufwand erheblich reduziert werden und die Bewegungseinheit 1 entsprechend variabel eingesetzt werden. Die x-und y-Komponenten können aber auch durch ein dem GPS ähnliches, lokales Positioniersystem ermittelt werden. So kann beispielsweise bei Herstellung nicht dargestellter unterschiedlicher Montageteile 2 auf einer Montageanlage für jeden einzelnen Montageteil 2 und jede einzelne Bewegungseinheit 1 ein entsprechendes Programm rasch erstellt und gespeichert werden. Die Ein- und/oder Ausgabevorrichtung 79 kann jedoch auch als Keyboard, als Lesegerät für Chipkarten, Magnetkarten, CD's, Disketten oder Bänder ausgebildet sein.

In gleicher Weise können nun die anderen Steuer-Module 9 bzw. Bewegungseinheiten 1 initialisiert werden. Bei Verwendung eines Busleitungssystem wird das dem bereits initialisierten Steuer-Modul 9 nachfolgende Steuer-Modul 9 an ersteres über die nicht dargestellte Busleitung 97 angeschlossen. Dabei erfolgt die Übermittlung der potentiellen Soll-Werte an die zentrale Kontrolleinheit 134 unter Umgehung des vorhergehenden Steuer-Moduls 9. Die Bedienperson kann nun auch für dieses weitere Steuer-Modul 9 die aktuellen Soll-Werte festlegen, welche in der Kontrolleinheit 134 oder im Speicher 131 als Daten oder in Programmform gespeichert werden können. In dieser Weise kann für jedes einzelne Steuer-Modul 9 das entsprechende Handlingprogramm vorgegeben werden.

Da jedoch vielfach die Aktivierung eines Steuer-Modul 9 vom Handlingparameter eines anderen Steuer-Modul 9 abhängig sein kann, ist auch eine Verknüpfung der einzelnen Handlingprogramme der Steuer-Module 9 erforderlich. Dies kann über die Kontrolleinheit 134 und/oder die Steuer-Module 9 selbst erfolgen. Zu diesem Zwecke kann beispielsweise nach erfolgter Initialisierung eines Steuer-Moduls 9, d.h. nach erfolgter Festlegung der aktuellen Soll-Werte dieses in Dialogform der Bedienperson die Frage "Startsignal?" stellen. Dieses Startsignal ist als frei definierbare Variable gebildet, welche von der Bedienperson eingesetzt wird. Die Bedienperson kann dabei ein Signal einer anderen Bewegungseinheit 1 insofern verwenden, als diese andere Bewegungseinheit 1, d.h. das andere Steuer-Modul 9 veranlaßt, ein Überwachungssignal, welches von den Melde- und/oder Überwachungsorganen 16 dieser weiteren Bewegungseinheit 1 über beispielsweise den D/A-Wandler 133 an den Mikroprozessor 127 weitergeleitet wird und über die Schnittstelle 129 als an die das Startsignal benötigende Bewegungseinheit 1 adressierter Datenbus weiterleitet, welcher in die Variable "Startsignal?" eingesetzt wird. Eine derartige Verknüpfung verschiedener Steuer-Module 9, d.h. verschiedener Bewegungseinheiten 1, kann jedoch auch über die Ein- und/oder Ausgabevorrichtung 79 eines Steuer-Moduls 9 erfolgen.

Der Steuermodus wird folgendermaßen erfüllt:

Die Schnittstelle 129 ist mit einer Zentralverbindungsleitung 135 verbunden, welche als serielle oder parallele Busleitung 136 ausgebildet ist und zu zumindest einer Kontrolleinheit 134 sowie zu weiteren Bewegungseinheiten 1 führt. Von der Kontrolleinheit 134 und/oder von einem oder mehreren weiteren Steuer-Module 9 erhält die Schnittstelle 129 einen oder mehrere, mit einer Adresse versehene Datensätze. In der Auswerteeinheit 130 wird ein Vergleich dieser Adressen mit der Adresse des Steuer-Moduls 9 durchgeführt, wo bei Übereinstimmung der Adressen das Steuer-Modul 9 mit dem übermittelten Datensatz beaufschlagt wird. Ein derartiger Datensatz kann im vorliegenden Beispiel lediglich ein Startimpuls für das Steuer-Modul 9 und damit für die betreffende Bewegungseinheit 1 sein, welcher beispielsweise von einem Steuer-Modul 9 einer anderen Bewegungseinheit 1, die ihre Aufgaben erfüllt hat, gesendet wird.

Dabei kann, wie bereits oben beschrieben, die Bedienperson mittels der Kontrolleinheit 134 oder einer externen Ein- und/oder Ausgabevorrichtung 79 den Mikroprozessor 127 des Steuer-Moduls 9 dieser anderen Bewegungseinheit 1 anweisen, ein über ein Melde- und/oder Überwachungsorgan 16 aufgenommenes Signal, beispielsweise eine Position des Pneumatikzylinders 13 über die Schnittstelle 129 an ein Steuer-Modul 9 einer Bewegungseinheit 1 adressiert in die Busleitung 136 einzuspeisen, wodurch dieses Signal an die Schnittstelle 129 des Steuer-Moduls 9 der Bewegungseinheit 1 gelangt und in den Mikroprozessor 127 dieses Steuer-Moduls 9 eingespeist wird, wo es als Startimpuls für das von der Bedienperson im Zuge des Initialisierungsmodus im Speicher 131 des Steuer-Moduls 9 oder in der zentralen Kontrolleinheit 134 festgelegten Programms für diese Bewegungseinheit 1 herangezogen wird.

Mit Eintreffen des Startimpulses im Mikroprozessor 127 beginnt nun dessen Programm zu laufen. Dabei wird über den Treiber 132, falls einer vorhanden ist, ein oder mehrere Schalt-Module 10 über eine oder mehrere Steuerleitungen 49 beaufschlagt, sodaß beispielsweise eine als Antrieb 48 der Schalt-Module 10 ausgebildete Spule mit Strom durchflossen wird und einen Ventilkörper mittels Magnetkraft bewegt. Dadurch wird beispielsweise über die in Fig. 4 dargestellte Anschlußöffnung 82 des Pneumatikzylinders 13 dieser mit Luftdruck beaufschlagt und fährt beispielsweise mit konstanter Geschwindigkeit aus. Es ist aber auch möglich, statt herkömmlicher Pneumatikventile 11 Servoventile einzusetzen und damit die Geschwindigkeit des Kolbens 36 veränderbar auszugestalten.

Erreicht nun der Kolben 36 eine Position, welche mit dem Meßorgan und/oder dem in Fig. 4 dargestellten Melde- und/oder Überwachungsorgan 16 ermittelt und/oder im Programm des Mikroprozessors 127 veränderbar vorgegeben werden kann, so kommt ein Impuls über eine Steuerleitung 49 zum Mikroprozessor 127, der ein entsprechendes Signal an das Schall-Modul 10, d.h. an den Antrieb 48 eines Pneumatikventils 11 sendet und beispielsweise die Luftzufuhr des Pneumatikzylinders 13 beendet und dessen Bewegung stoppt. Selbstverständlich kann aber auch in der Kontrolleinheit 134 die Auswertung von als Melde- und/oder Überwachungsorgane 16 ausgebildete Sensoren 137 und die Ansteuerung bzw. Beaufschlagung einzelner Aktoren 138 einer Bewegungseinheit 1 beispielsweise direkt über die zentrale Busleitung 136 erfolgen. Darüber hinaus sollen diese Schalt- und Steuer-Vorgänge nicht einschränkend verstanden werden und nur ein einfaches Beispiel eines Steuer-Moduls 9 darstellen. Weiters kann die Datenübermittlung zwischen der Steuereinrichtung 7 und der Kontrolleinheit 134 und/oder von den einzelnen Bestandteilen der Steuereinrichtung 7 zu dieser optisch mittels Laser oder beispielsweise mittels Infrarot oder Ultraschall erfolgen.

Wie bereits angeführt, weist das Steuer-Modul 9 auch einen Lernmodus auf. Dabei wird, wie bereits beim Steuermodus, beispielsweise eine vom Kolben 36 zu erreichende Position, d.h. ein Soll-Wert im Programm des als Logikelement 139 ausgebildeten Mikroprozessors 127 vorgegeben und beispielsweise mittels eines Meßorgans, insbesondere einer Wegmeßvorrichtung ermittelt.

Erreicht der Kolben 36 diese Position, so wird der entsprechende Impuls einer ein Melde- und/oder Überwachungsorgan 16 bildenden Wegmeßvorrichtung im Mikroprozessor 127 ausgewertet und der erforderliche Impuls an das Schalt-Modul 10 abgegeben, welches die Energiezufuhr zur Antriebseinrichtung 5 stoppt. Aufgrund der kinematischen Energie des Kolbens 36 kann es dabei aber, trotz Beendigung der Luftzufuhr, zu einer Bewegung des Kolbens 36 über die vorgegebene Position hinaus kommen, worunter die Positioniergenauigkeit der Bewegungseinheit 1 leiden kann.

Über die Wegmeßvorrichtung wird nun die tatsächliche Position, d.h. der Ist-Wert der Bewegungseinheit 1, insbesondere des stillstehenden Kolbens 36 ermittelt und in den Mikroprozessor 127 und/oder in die zentralen Kontrolleinheit 134 weitergeleitet, wo der Ist-Wert mit dem Soll-Wert verglichen und die Differenz der Sollposition und der Ist-Position des Kolbens 36 ermittelt wird. Nach Ermittlung der Differenz gibt der Mikroprozessor 127 einen Impuls zum Öffnen eines Schalt-Moduls 10, wodurch der Kolben 36 um die Differenz beispielsweise gedrosselt zurück bewegt wird und so die exakte Position erreicht wird, d.h. der Ist-Wert an den Soll-Wert angepaßt wird. Diese Differenz wird weiters beim nächsten Bewegungszyklus herangezogen, um das Schalt-Modul 10 nicht erst bei Erreichen der Sollposition zu betätigen, sondern um die errechnete Differenz früher. Das bedeutet, daß der Ist-Wert als Soll-Wert definiert wird, welcher einen beispielsweise in Hinblick auf Zykluszeit, Verschleiß, Erschütterung, u.a. optimierten Zeitwert darstellt. Ein derartiger Lernmodus ist insbesondere zur Erhöhung der Beschleunigung des Kolbens 36 und einer entsprechenden Dämpfung, d.h. Verzögerung des Kolbens 36 von Vorteil. Der Vorteil einer derartigen Lernfunktion liegt insbesondere darin, daß bei Verwendung von Servoventilen die Kolben 36 der Pneumatikzylinder 13 beschleunigt oder verzögert werden und dadurch eine Veränderung der kinematischen Energie des Kolbens eintritt, was die Verzögerung des Kolbens im Hinblick auf eine exakte Positionierung erschwert.

Ein weiteres Beispiel für den Lernmodus kann bei Verwendung entsprechender Sensoren 137, insbesondere Mikrosensoren, die Belastungen und damit den Verschleiß der Bewegungseinheit reduzieren. So kann beispielsweise, wie in Fig. 1 gezeigt,am Werkstückträger 20, insbesondere auf dessen Oberseite 31 ein als Melde- und/oder Überwachungsorgan 16 ausgebildeter Erschütterungssensor angebracht sein, der seine Daten drahtlos oder leitungsgebunden an das Steuer-Modul 9 und/oder an die Kontrolleinheit 134 übermittelt. Ein derartiger Erschütterungssensor und/oder Kraftsensor kann jedoch auch an der Bewegungseinheit 1 beispielsweise am Bauteil 3 und/oder Bauteil 4 angeordnet sein.

Wird nun beispielsweise nach dem Initialisierungsmodus der erste Zyklus der Bewegungseinheit 1 durchgeführt und fährt wie aus Fig. 1 zu entnehmen beispielsweise ein Greifer mit einem Montageteil 2 zu "hart" auf den Werkstückträger 20, bzw. auf eine Aufnahme 32 für den Montageteil 2 auf, so meldet der Erschütterungssensor den Wert der Erschütterung an das Steuer-Modul 9 und/oder an die Kontrolleinheit 134. Diese werten den Meßwert aus und errechnen bei Überschreiten eines bestimmten vorgebbaren Zielwertes, beispielsweise über Rechenalgorithmen wie Fuzzy-Logik, neuronale Netze oder genetische Algorithmen, eine neue Endposition des Greifers, bei deren Erreichen der Montageteil 2 nicht mehr "so hart" in die Aufnahme 32 eingelegt wird, was vorzugsweise über eine nachfolgend beschriebene Endlagendämpfung erreicht wird. Die relative Anzahl der Zyklen zwischen zwei aufeinander folgenden Anpassungen der Positionen der Bauteile 3, 4 kann dabei der Festlegung eines Wartungsplanes dienen. Dadurch ist es nun möglich,auf Basis des vorgebbaren Soll-Wertes eine optimale Fahrkurve der Bewegungseinheit 1 zu ermitteln und die Schalt-Module 10 entsprechend anzusteuern.

Es ist aber auch möglich, über Druckmessung den Verschleiß zu ermitteln und damit Wartungsprognosen zu erstellen. So wird beispielsweise bei der Initialisierung der Druck in der Zuluftleitung des Pneumatikzylinders 13 über einen Drucksensor ermittelt und im Speicher 131 gespeichert. Zyklisch erfolgt eine Ermittlung der aktuellen Drücke. Infolge eines Verschleißes, beispielsweise im Bereich des Kolbens 36 und des Zylinderrohres 15 oder der ebenfalls als Führungsvorrichtung 6 ausgeführten, in Fig. 6 dargestellten Linearführung 119 nimmt die Gleitreibung ab, was zu einer Reduzierung der Reibungskräfte und damit unmittelbar zu einer Reduzierung des Druckes führt. Dieser Druckabfall signalisiert somit den Verschleißgrad der betreffenden Elemente und kann, wie bereits beschreiben, für die Modi der Bewegungseinheit 1 als Parameter herangezogen werden.

Mit dem ebenfalls vorgesehenen Überwachungsmodus kann nun beispielsweise eine exakte Wartung und Instandhaltung der Bewegungseinheit 1 stattfinden. Der Mikroprozessor 127 zählt beispielsweise die absolute Anzahl der durchgeführten Zyklen und die relative Zyklenanzahl zwischen zwei aufeinanderfolgenden Korrekturen der Parameter aufgrund des Lernmodus. Nimmt nun die relative Zyklenanzahl so weit ab, daß eine vorgebbare Mindestzyklenzahl unterschritten wird, so liefert der Mikroprozessor 127 ein Instandsetzungssignal entweder unmittelbar an die Kontrolleinheit 134 oder über die externe Schnittstelle 129 an externe Ein- und/oder Ausgabevorrichtungen 79. Das Instandsetzungssignal wird in einer Beziehung zur absoluten Zyklenzahl gesetzt und es kann daraus ein Wartungsplan für die Zukunft erstellt werden.

Selbstverständlich kann der Verschleiß aber auch direkt beispielsweise durch Oberflächenrauhigkeitsmessungen und/oder durch kontinuierliche Vermessung der Objekte, beispielsweise des Kolbens 36 oder der Dichtringe ermittelt werden. Vor allem in den Bereichen Steuerungs- und Lernmodus können bestimmte Bewegungsmodi für die Bewegungseinheit 1, wie beispielsweise "Normalfahrt". "Langsamfahrt" oder "Eilfahrt" von Positionierwegen und Geschwindigkeitsprofilen 140 vorgegeben werden.

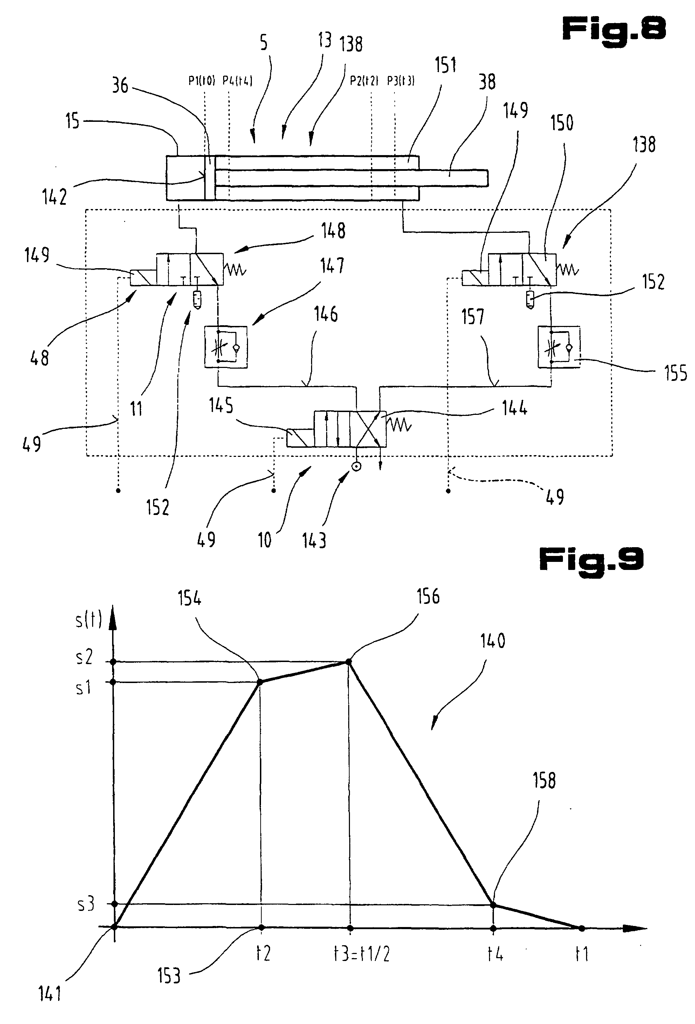

Die Funktionen der Bewegungseinheit 1 sollen nun anhand einer in Fig. 8 dargestellten Steuerung für variable Geschwindigkeiten und Endlagendämpfung eines Kolbens 36 in einer vorbestimmbaren Position erläutert werden.

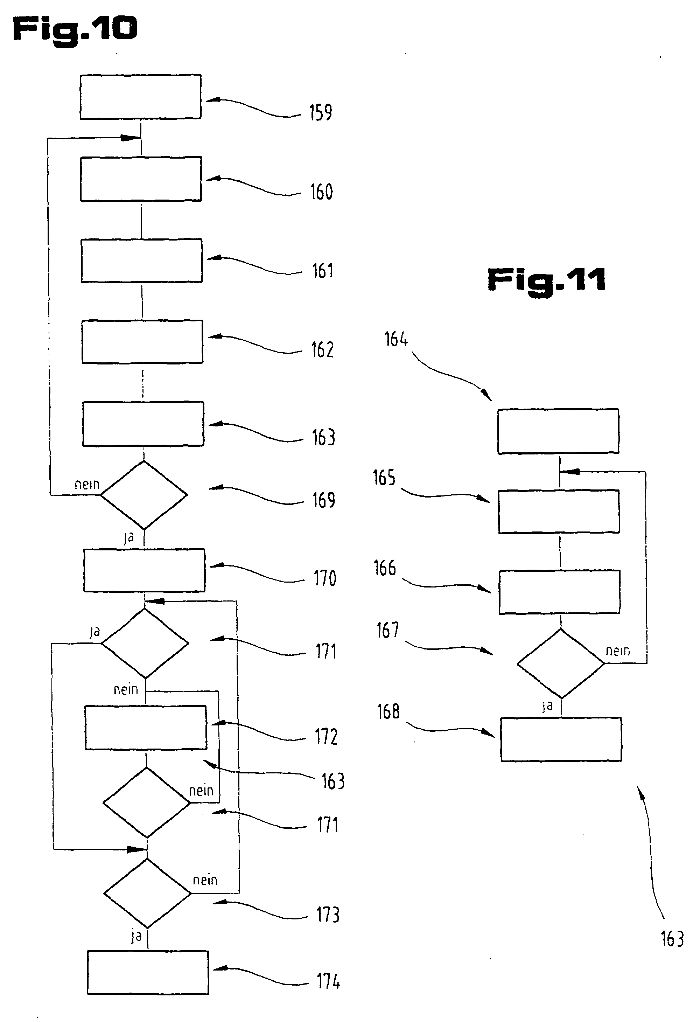

Ausgangspunkt ist dabei die aus der Taktzeit einer Montageanlage sich ergebende, beispielsweise zur Verfügung stehende Bewegungszeit einer Bewegungseinheit 1, insbesondere eines doppelt wirkenden Pneumatikzylinders 13. Diese sollte beispielsweise bei 70 ms liegen. Wie aus Fig. 9 besser ersichtlich, ergibt sich daraus das Geschwindigkeitsprofil 140. Der Pneumatikzylinder 13 wird zum Zeitpunkt und/oder bei Position 141 auf einer Seite 142 mit Druckluft beaufschlagt. Diese kommt von einer zentralen oder dezentralen Druckluftversorgung 143, welche an einem als Schalt-Modul 10 ausgebildeten, elektrisch betätigten 4/2-Wege-Ventil 144 angeschlossen ist. Das elektrisch betätigte 4/2-Wege-Ventil 144, beispielsweise der als Spule ausgebildete Antrieb 145 ist über eine Steuerleitung 49 und dem Treiber 132 mit dem Mikroprozessor 127 verbunden, der über die Schnittstelle 129, die Auswerteeinheit 130 und die Busleitung 136 das Startsignal von der Kontrolleinheit 134 oder einem Steuer-Modul 9 einer anderen Bewegungseinheit 1 erhält.

Durch dieses Startsignal wird das 4/2-Wege-Ventil 144 geschaltet und eine Leitung 146 unter Druck gesetzt. Dabei wird ein als Schall-Modul 10 ausgebildetes Drosselrückschlagventil 147 in Strömungsrichtung zum Pneumatikzylinder 13 freigegeben und die Druckluft erreicht ungedrosselt ein elektrisch betätigtes 3/2-Wege-Ventil 148. Ein Antrieb 149 dieses Ventiles ist über eine eigene Steuerleitung 49 oder über die Steuerleitung 49 des 4/2-Wege-Ventils 144 mit dem Mikroprozessor 127 verbunden und ist beim Vorlauf des Kolbens 36 unbetätigt, sodaß ein freier Durchlauf der Druckluft zur Seite 142 gegeben ist.

Gleichzeitig (zum Zeitpunkt oder Position 141) mit dem Start-Impuls am 4/2-Wege-Ventil 144 wird ein Impuls über eine Steuerleitung 49 an ein weiteres 3/2-Wege-Ventil 150, beispielsweise lediglich vom Mikroprozessor 127 und nicht von der Kontrolleinheit 134 übertragen, welches mit der Seite 151 des Pneumatikzylinders 13 verbunden ist und in diesem betätigtem Zustand die Seite 151 beispielsweise über einen Schalldämpfer 152 vollständig entlüftet. Der Kolben 36 kann nun mit vollen Druck auf Seite 142 beschleunigt werden und erreicht beim, im Mikroprozessor 127 oder in der Kontrolleinheit 134 vorgebbaren Zeitpunkt 153 die Position 154. Zum Zeitpunkt 153 wird der Impuls vom Mikroprozessor 127 zum weiteren 3/2-Wege-Ventil 150 abgeschaltet, wodurch dieses beispielsweise federkraftbetätigt in ihre Ruhelage zurück bewegt wird und der Auslaß der Druckluft von der Seite 151 nicht mehr über einen Schalldämpfer 152, sondern mit Gegendruck durch ein weiteres Drosselrückschlagventil 155 erfolgt, wodurch die Kolbengeschwindigkeit bis zum Erreichen von Position 156 reduziert wird.

Bei Position 156 beginnt entweder eine in Fig. 10 nicht dargestellte Verweilzeit, während deren eine beispielsweise an der Kolbenstange 38 angeordnete weitere Bewegungseinheit 1 ihre Aufgabe erfüllt, oder es beginnt der Rücklaufvorgang des Kolbens 36. Dazu wird der Impuls auf dem Antrieb 145 des 4/2-Wege-Ventils 144 aufgehoben, wodurch dieses durch die Federkraft seine Ruhelage einnimmt. In dieser strömt nun die Luft in eine Leitung 157 in Richtung zur Seite 151. Dabei wird das Drosselrückschlagventil 155 ungedrosselt in Richtung des zweiten 3/2-Wege-Ventils 150 durchströmt, dessen Antrieb 149 nicht beaufschlagt wird und somit die Druckluft die Seite 151 erreicht.

Gleichzeitig bei Position 156 wird vom Mikroprozessor 127 ein Impuls an den Antrieb 149 des ersten 3/2-Wege-Ventils 148 abgegeben und dieses betätigt, wodurch die Seite 142 über einen Schalldämpfer 152 vollständig entlüftet wird. Der Kolben 36 bewegt sich nun mit maximaler Geschwindigkeit von Position 156 zu einer Position 158. Bei Erreichen von Position 158 wird der Impuls, d.h. die Spannung am Antrieb 149 des ersten 3/2-Wege-Ventils 148 aufgehoben, wodurch dieses federkraftbetätigt in seine Ruhelage zurückgeführt und den Weg in Richtung zum ersten Drosselrückschlagventil 147 freigibt, wodurch die aus der Seite 142 ausströmende Druckluft gedrosselt und der Kolben 36 abgebremst wird. Sowohl in der Position 141 als auch in der Position 156 können - in Fig. 6 dargestellt - Feststellvorrichtungen 122 beispielsweise in Form von schaltbaren Endanschlägen angeordnet sein, welche selbst als Melde- und/oder Überwachungsorgane 16 fungieren können oder aber zusätzliche Melde- und/oder Überwachungsorgane 16 aufweisen. Ist ein solches in Position 141 angeordnet, so würde beispielsweise ein Impuls über eine eigene Steuerleitung 49 oder eine Zentralverbindungsleitung 135 an den Mikroprozessor 127 geleitet, welcher dieses Signal über die Auswerteeinheit 130 und die Schnittstelle 129 an die Kontrolleinheit 134 weiterführt und/oder selbst zu einem Impuls verarbeitet, in dem er das beispielsweise im Speicher 131 angelegte Programm beendet.

Selbstverständlich kann statt der Zeitsteuerung eine Wegmessung in der Antriebseinrichtung 5 erfolgen und entsprechend vorgebbarer Positionen die beschriebenen Impulse erzeugt und verteilt werden. Die genannten Schalt-Module 10, d.h. das 4/2-Wege-Ventil 144, die 3/2-Wege-Ventile 148, 150 und die Drosselrückschlagventile 147, 155 stellen nur Beispiele dar und können selbstverständlich entsprechend unterschiedlicher Steuerungsfunktionen durch andere Schalt-Module 10 ersetzt und/oder ergänzt werden.

Eine Schwierigkeit der einzelnen Modi liegt darin, einen Referenzparameter zu schaffen, welcher den Ausgangspunkt für die Verknüpfung der einzelnen Steuer-Module 9 bzw. Bewegungseinheiten 1 bildet. Ein derartiger Referenzparameter kann beispielsweise die Geschwindigkeit eines Pneumatikzylinders 13 und damit die Taktzeit einer Bewegungseinheit 1 sein. Hierbei kann nun im Zuge des Initialisierungsmodus die Taktzeit jeder einzelnen Bewegungseinheiten 1 ermittelt und beispielsweise in die zentrale Kontrolleinheit 134 weitergeleitet werden. Dort erfolgt ein Vergleich sämtlicher Taktzeiten der Bewegungseinheiten 1 untereinander und eine Ermittlung der "langsamsten" Bewegungseinheit 1, d.h. die Feststellung der größten Taktzeit der Bewegungseinheiten 1. Auf diese Taktzeit erfolgt dann die Abstimmung der Taktzeiten der übrigen Bewegungseinheiten 1, beispielsweise mit Hilfe des Lernmodus.

In den gemeinsam beschriebenen Fig. 10 und 1 ist nun beispielhaft der Ablauf des Initialisierungsmodus in Kombination mit dem Lernmodus zur Optimierung von Soll-Werten in Hinblick auf die Zykluszeit dargestellt. Soll nun eine Montageanlage aus mehreren nicht dargestellten Bewegungseinheiten 1 zusammengesetzt werden, so wird mit dem Verfahrensschritt 159 begonnen. In diesem erfolgt eine Auswahl einer zu optimierenden physikalischen Zielgröße in der in Fig. 7 dargestellten zentralen Kontrolleinheit 134 und/oder im Steuer-Modul 9 aus einer bestimmten Menge derartiger physikalischen Zielgrößen. Diese können beispielsweise die maximale Geschwindigkeit, der minimale Stoß oder die notwendige Geschwindigkeit sein. Die notwendige Geschwindigkeit einer Bewegungseinheit 1 orientiert sich dabei an jener Bewegungseinheit 1, welche für einen bestimmten von ihr durchzuführenden Montageschritt aus Verfahrensgründen die größte Zeit in Anspruch nimmt. Da diese "langsamste" Bewegungseinheit 1 die Taktzeit der gesamten Montageanlage bestimmt, ist es nicht erforderlich, daß andere Bewegungseinheiten 1, welche "schneller" sind als die "langsamste" Bewegungseinheit 1, die von ihr durchzuführenden Montageschritte in deren minimalen möglichen Einzeltaktzeit vollführen.

Paßt man die Einzeltaktzeiten, d.h. die Einzelgeschwindigkeiten der verschiedenen Bewegungseinheiten 1 jener der "langsamsten" Bewegungseinheit 1 an, so kann dadurch ein unnötiger Verschleiß in den potentiell schnelleren Bewegungseinheiten 1 vermieden werden. Nach dem Verfahrensschritt 159 erfolgt die Sequenz 160. In dieser wird die Verbindung zwischen der zentralen Kontrolleinheit 134 und der ersten Bewegungseinheit 1 bzw. des ersten Steuer-Moduls 9 beispielsweise über die Busleitung 136 hergestellt. Im Anschluß daran erfolgt Vorgang 161. In diesem werden die im Steuer-Modul 9 insbesondere im Speicher 131 festgelegten potentiellen Soll-Werte der Bewegungseinheit 1 beispielsweise maximale Verfahrwege in x- und y-Richtung an die zentrale Kontrolleinheit 134 automatisch durch Herstellung der Verbindung in Sequenz 160 übermittelt. Danach schließt Verfahrensschritt 162 an, in dem nun die der entsprechenden Montagesituation der Bewegungseinheit 1 angepaßten aktuellen Soll-Werte der Bewegungseinheit 1 bzw. des Steuer-Moduls 9 an der zentralen Kontrolleinheit 134 oder beispielsweise an einer externen Ein-und/oder Ausgabevorrichtung 79 vorgegeben werden. Ist Verfahrensschritt 162 abgeschlossen, so erfolgt Sequenz 163, welche durch den Lernmodus gebildet wird.

Dieser ist nun in Fig. 11 genauer dargestellt. Der Lernmodus beginnt mit Vorgang 164, bei dem das mit Soll-Werten programmierte Steuer-Modul 9 bzw. die Bewegungseinheit 1 manuell und extern gestartet wird, worauf Verfahrensschritt 165 anschließt. In diesem erfolgt nun die Betätigung der Schalt-Module 10 der Bewegungseinheit 1 entsprechend den eingegebenen aktuellen Soll-Werten. Haben die Schalt-Module 10 ihre vorgegebenen Abläufe beendet und hat damit die Bewegungseinheit 1 beispielsweise ihre entsprechend den Soll-Werten vorgegebene Soll-Position erreicht, so erfolgt in der Sequenz 166 eine Ermittlung der Ist-Werte, d.h. beispielsweise der tatsächlichen Ist-Positionen der Bauteile 3, 4 der Bewegungseinheit 1. Anschließend wird im Vorgang 167 ein Vergleich der ermittelten Ist-Werte mit den eingegebenen Soll-Werten durchgeführt und bei mangelnder Übereinstimmung zum Beginn des Verfahrensschrittes 165 zurückgegangen und damit eine weitere Betätigung der Schalt-Module 10 sowie eine Positionsänderung der Elemente, z.B. der Bauteile 3, 4 der Bewegungseinheit 1 durchgeführt. Ist der Soll-Ist-Vergleich im Vorgang 167 erfolgreich, d.h. stimmen die Ist-Werte mit den Soll-Werten überein, so erfolgt eine Speicherung der Ist-Zielgröße der betreffenden Bewegungseinheit 1 in der Sequenz 168. Welche Zielgröße aus einer möglichen Mehrzahl von Ist-Zielgrößen gespeichert werden soll, bestimmt sich dabei nach der in Verfahrensschritt 159 durchgeführten Auswahl der zu optimierenden physikalischen Zielgröße.

Nach erfolgtem Lernmodus der einzelnen Bewegungseinheiten 1, erfolgt in Verfahrensschritt 169 eine Abfrage, ob nun der Verfahrensschritt 159, die Sequenz 160, der Vorgang 161, der Verfahrensschritt 162 und die Sequenz 163 für sämtliche Steuer-Module 9 bzw. sämtliche Bewegungseinheiten 1 durchgeführt ist. Ist dies nicht der Fall, so erfolgt ein Rückschritt zum Beginn der Sequenz 160, wodurch der eben beschriebene Ablauf für ein weiteres Steuer-Modul 9 bzw. eine weitere Bewegungseinheit 1 durchgeführt wird. Sind jedoch alle Steuer-Module 9 bzw. Bewegungseinheiten 1 derart initialisiert bzw. haben diese ihre optimalen Einstellungen gelernt, so erfolgt im Vorgang 170 die Ermittlung des gemeinsamen Zielwertes aller Bewegungseinheiten 1 aus der Menge der in der Sequenz 163 ermittelten und gespeicherten Ist-Zielgrößen der einzelnen Bewegungseinheiten 1.

Dieser Zielwert kann beispielsweise, wie bereits angegeben, die Taktzeit der "langsamsten" Bewegungseinheit 1 sein, welche die notwendige Geschwindigkeit für sämtliche Bewegungseinheiten 1 vorgibt. Im Vorgang 171 erfolgt nun beginnend mit der ersten Bewegungseinheit 1, ein Vergleich der Ist-Zielgröße mit dem Zielwert. Stimmen diese nicht überein, so erfolgt Verfahrensschritt 172, welcher beispielsweise durch die Sequenz 163, d.h. durch den Lernmodus, gebildet wird. Nach erfolgtem Lernmodus, d.h. nach Beendigung der Sequenz 163 und Anpassung der Ist-Werte der Bewegungseinheit 1 an den Zielwert erfolgt wiederum Vorgang 171, d.h. neuerlich ein Vergleich der Ist-Zielgröße der ersten Bewegungseinheit 1 mit dem Zielwert. Stimmen diese beiden nicht überein, so wird wieder zurückgegangen bis zum Beginn des Verfahrensschrittes 172, d.h. zum Lernmodus. Ist der Vergleich jedoch erfolgreich, d.h. stimmen diese beiden überein, so erfolgt in Sequenz 173 eine Abfrage, ob alle Ist-Zielgrößen aller Bewegungseinheiten 1 bzw. aller Steuer-Module 9 mittels Vorgang 171 mit dem Zielwert verglichen und angepaßt wurden.

Ist dies nicht der Fall, so erfolgt ein Rückschritt bis zum Beginn des Vorganges 171, wo nun die Ist-Zielgröße einer weiteren Bewegungseinheit 1 mit dem Zielwert verglichen wird. Stimmt die Ist-Zielgröße mit dem Zielwert, welche im Vorgang 171 verglichen werden, überein, so erfolgt ein Weitergehen bis zum Beginn der Sequenz 173. Wird durch Sequenz 173 ermittelt, daß alle Ist-Zielgrößen aller Bewegungseinheiten 1 bzw. Steuer-Module 9 mit dem Zielwert verglichen sind, so erfolgt ein Weitergehen zu Vorgang 174, d.h. es beginnt beispielsweise der Steuermodus und/oder der Überwachungsmodus, wobei die Montageanlage ihren Betrieb aufnimmt.

Ergänzend sei erwähnt, daß Verfahrensschritte 159, 162, 165, 169, 172 und/oder Sequenzen 160, 163, 168,170 und/oder Vorgänge 161, 164, 167, 170 sowohl in der zentralen Kontrolleinheit 134 als auch in einem einzelnen Steuer-Modul 9 einer Bewegungseinheit 1 oder in mehreren Steuer-Modulen 9 und mehreren Bewegungseinheiten 1 vorgegeben werden können.

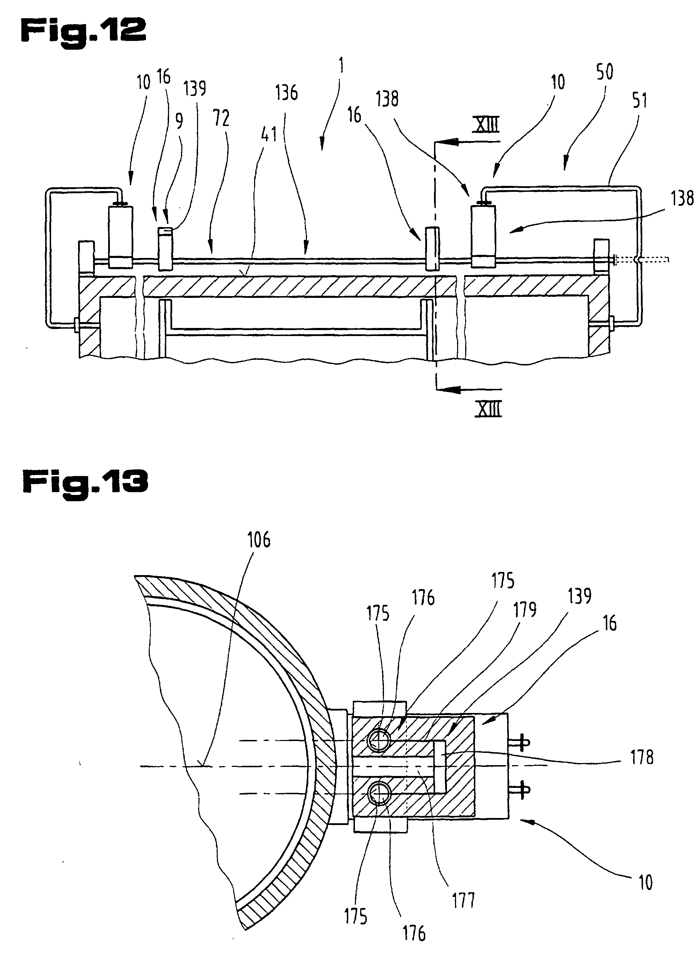

In den gemeinsam beschriebenen Fig. 12 und 13 ist eine weitere Ausführungsvariante der erfindungsgemäßen Bewegungseinheit 1 gezeigt. Diese ist grundsätzlich wie die in Fig. 4 bzw. 5 dargestellte Bewegungseinheit 1 aufgebaut. Die Bewegungseinheit 1 weist benachbart zur Außenfläche 41 Melde- und/oder Überwachungsorgane 16 und Schalt-Module 10 auf. Die Melde- und/oder Überwachungsorgane 16, welche eigene Steuer-Module 9 und/oder Logikelemente 139 aufweisen können, besitzen vorzugsweise symmetrisch um die Mittelebene 106 angeordnete Kontaktierungsöffnungen 175, welche eine Leitungsverbindung zu einer aus beispielsweise zwei Einzelleitern 176 bestehenden Busleitung 136, welche die elektrische Verteilerschiene 72 bildet, durchführt. Die Busleitung 136 kann jedoch auch als 3-Leiter-System ausgebildet sein, wovon ein Leiter als Not-Aus-Leiter ausgebildet ist, über den die Energieversorgung sämtlicher Aktoren 138 unterbrochen wird. Dabei weist das Melde- und/oder Überwachungsorgan 16 beispielsweise ein Initiatorelement 177, einen mit diesem verbundenen, das Logikelement 139 bildenden Elektronikbaustein 178 und Verbindungsleitungen 179 vom Elektronikbaustein 178 zu den Kontaktierungsöffnungen 175 auf, über welche die aufgenommenen Signale vom Initiatorelement 177 auf die Busleitung 136 übertragen wird.

Auch die Schalt-Module 10 weisen nicht dargestellte Kontaktierungsöffnungen 175 auf, über welche diese mit Energie über die Busleitung 136 versorgt werden. Die Busleitung 136 besitzt beispielsweise einen kreisförmigen Querschnitt, wodurch es ermöglicht wird, sowohl die Schaltmodule 10, als auch die Melde- und/oder Überwachungsorgane 16, insbesondere deren Position beliebig längs der Bewegungseinheit 1 zu verändern. Es ist jedoch auch möglich, die Busleitung 136 in Leitungen 50, insbesondere in einem Pneumatikschlauch 51 für die Schalt-Module 10 zu integrieren.

Abschließend sei darauf hingewiesen, daß in den zuvor beschriebenen Ausführungsbeispielen einzelne Teile unproportional vergrößert dargestellt wurden, um das Verständnis der erfindungsgemäßen Lösung zu verbessern. Des weiteren können auch einzelne Teile der zuvor beschriebenen Merkmalskombinationen der einzelnen Ausführungsbeispiele in Verbindung mit anderen Einzelmerkmalen aus anderen Ausführungsbeispielen, eigenständige, erfindungsgemäße Lösungen bilden.

Die diesbezüglichen erfindungsgemäßen Aufgaben und Lösungen sind den Detailbeschreibungen dieser Figuren zu entnehmen.

### Bezugszeichenaufstellung

- 1: Bewegungseinheit
- 2: Montageteil
- 3: Bauteil
- 4: Bauteil
- 5: Antriebseinrichtung

- 6: Führungsvorrichtung
- 7: Steuereinrichtung
- 8: Teil
- 9: Steuer-Modul
- 10: Schalt-Modul

- 11: Pneumatikventil
- 12: Pneumatikantrieb
- 13: Pneumatikzylinder
- 14: Abschlußelement
- 15: Zylinderrohr

- 16: Melde- und/oder Überwachungsorgan
- 17: Näherungsschalter
- 18: Transportvorrichtung
- 19: Antriebs- und/oder Führungsvorrichtung
- 20: Werkstückträger

- 21: Antriebsachse
- 22: Mittelachse
- 23: Antriebsrad
- 24: Abstand
- 25: Führungsrad

- 26: Fläche
- 27: Flankenfläche
- 28: Innenabstand
- 29: Ausnehmung
- 30: Radbreite

- 31: Oberseite
- 32: Aufnahme
- 33: Rolle
- 34: Bohrung
- 35: Bolzen

- 36: Kolben
- 37: Kolbenfläche
- 38: Kolbenstange
- 39: Druckstück
- 40: Gewindeabschnitt

- 41: Außenfläche
- 42: Konsole
- 43: 4/2-Wege-Ventil
- 44: Drosselrückschlagventil
- 45: Drosselrückschlagventil

- 46: 3/2-Wege-Ventil
- 47: 3/2-Wege-Ventil
- 48: Antrieb
- 49: Steuerleitung
- 50: Leitung

- 51: Pneumatikschlauch
- 52: Eingang
- 53: Busstecker
- 54: Ausgang
- 55: Verteilerleiste

- 56: Leistenlänge
- 57: Leistenbreite
- 58: Leistenhöhe
- 59: Stirnfläche
- 60: Öffnung

- 61: Kanal
- 62: Oberseite
- 63: Öffnung
- 64: Zuluftkanal
- 65: Abluftkanal

- 66: Verbindungskanal
- 67: Verbindungskanal
- 68: Oberseite
- 69: Schalldämpfer
- 70: Unterseite

- 71: Antrieb
- 72: Verteilerschiene
- 73: Kupplungsvorrichtung
- 74: Stecker
- 75: Anzeigeelement

- 76: Display
- 77: Eingabevorrichtung
- 78: Tastatur
- 79: Ein- und/oder Ausgabevorrichtung
- 80: Stirnseitenfläche

- 81: Mehrfachstecker
- 82: Anschlußöffnung
- 83: Zylinderinnenraum
- 84: Kolbenplatte
- 85: Flansch

- 86: Kolbenkörper
- 87: Außenfläche
- 88: Schlitten
- 89: Längsöffnung
- 90: Oberseite

- 91: Schlittenhöhe
- 92: Unterseite
- 93: Schlitzhöhe
- 94: Stirnfläche
- 95: Schnittstelle

- 96: Innenstirnfläche
- 97: Busleitung
- 98: Kupplungsvorrichtung
- 99: Außenfläche
- 100: Busleitung

- 101: Schnittstelle
- 102: Auswerteeinheit
- 103: Führungsvorrichtung
- 104: Länge
- 105: Schlitzbreite

- 106: Mittelebene
- 107: Tiefe
- 108: Nut
- 109: Nutbreite
- 110: Nuthöhe

- 111: Vertiefungsnut
- 112: Nutbreite
- 113: Bohrungsabstand
- 114: Verbindungskanal
- 115: Ventilpatrone

- 116: Bund
- 117: Kontaktelement
- 118: Befestigungsvorrichtung
- 119: Linearführung
- 120: Verbindungselement

- 121: Längselement
- 122: Feststellvorrichtung
- 123: Dämpfungsvorrichtung
- 124: Stoßdämpfer
- 125: Kugelbuchse

- 126: Führungswelle
- 127: Mikroprozessor
- 128: Leiterbahn
- 129: Schnittstelle
- 130: Auswerteeinheit

- 131: Speicher
- 132: Treiber
- 133: D/A-Wandler
- 134: Kontrolleinheit
- 135: Zentralverbindungsleitung

- 136: Busleitung
- 137: Sensor
- 138: Aktor
- 139: Logikelement
- 140: Geschwindigkeitsprofil

- 141: Position
- 142: Seite
- 143: Druckluftversorgung
- 144: 4/2-Wege-Ventil
- 145: Antrieb

- 146: Leitung
- 147: Drosselrückschlagventil
- 148: 3/2-Wege-Ventil
- 149: Antrieb
- 150: 3/2-Wege-Ventil

- 151: Seite
- 152: Schalldämpfer
- 153: Zeitpunkt
- 154: Position
- 155: Drosselrückschlagventil

- 156: Position
- 157: Leitung
- 158: Position
- 159: Verfahrensschritt
- 160: Sequenz

- 161: Vorgang
- 162: Verfahrensschritt
- 163: Sequenz
- 164: Vorgang
- 165: Verfahrensschritt

- 166: Sequenz
- 167: Vorgang
- 168: Sequenz
- 169: Verfahrensschritt
- 170: Vorgang

- 171: Vorgang
- 172: Verfahrensschritt
- 173: Sequenz
- 174: Vorgang
- 175: Kontaktierungsöffnung

- 176: Einzelleiter
- 177: Initiatorelement
- 178: Elektronikbaustein
- 179: Verbindungsleitung

## Patentansprüche

1. Bewegungseinheit (1), insbesondere Antriebseinrichtung (5), mit über eine Führungsvorrichtung (6) relativ zueinander verstellbaren Bauteilen (3; 4) und mit zumindest einer über eine Schnittstelle (129) mit einer Kontrolleinheit (134) verbindbare Steuereinrichtung (7), welche zumindest ein Schaltmodul (10), insbesondere ein Pneumatikventil (11), und zumindest ein, eine Logikinformation oder Businformation verarbeitendes Steuermodul (9) aufweist und dem Steuermodul (9) zumindest ein Schaltmodul (10) zugeordnet ist und das Schaltmodul (10) über zumindest eine Druckluft oder Hydraulikflüssigkeit führende Leitung (50; 147; 157) oder eine Anschlußöffnung (82) oder einen Kanal (61) zur Relativverstellung des Bauteiles (3; 4) mit der Antriebseinrichtung (5) verbunden ist, **dadurch gekennzeichnet, daß** das Steuermodul (9) und Schaltmodul (10) der Steuereinrichtung (7) in zumindest einem der Bauteile (3; 4) integriert oder unmittelbar an der durch einen Pneumatikantrieb (12) oder Hydraulikantrieb etc. gebildeten Antriebseinrichtung (5) aufgebaut ist und daß die Steuereinrichtung (7) zumindest ein Anzeigeelement (75, 79), welches beispielsweise als Display (76) mit Klartextanzeige, Nummernanzeige, Leuchtdioden oder als akustisches Informationselement ausgebildet ist, und eine Eingabevorrichtung (77, 79) aufweist und/oder ein Melde- und/oder Überwachungsorgan (16) im Bauteil (3) der Antriebseinrichtung (5) angeordnet ist und daß dieses als Endschalter und/oder Näherungsschalter (17) und/oder ein Wegmeßsystem und/oder ein Positionsermittlungssystem und/oder Erschütterungssensoren und/oder Kraftsensoren ausgebildet ist.

2. Bewegungseinheit (1), nach Anspruch 1 **dadurch gekennzeichnet, daß** auf zumindest einem Bauteil (3; 4) eine elektrische Verteilerschiene (72) und/oder eine pneumatische Verteilerleiste (55) zur Aufnahme von Steuer- und/oder Schalt - Modulen (9; 10) angeordnet ist und daß Steuerleitungen (49) und/oder Leitungen (50) und/oder Kanäle (61) darin integriert und mit Öffnungen (60) zur Verbindung mit den Schalt- und/oder Steuer-Modulen (10; 9) sowie der Antriebseinrichtung (5) versehen sind.

3. Bewegungseinheit (1), nach Anspruch 1 od 2 **dadurch gekennzeichnet, daß** die Steuereinrichtung (7), insbesondere das Steuer-Modul (9) und/oder, die Schalt-Module (10) Eingänge (52), beispielsweise für Signale und/oder Befehle einer zentralen Kontrolleinheit (134) und/oder der Schalt-Module (10) und/oder der Melde- und/oder Überwachungsorgane (16) und/oder von Steuereinrichtungen (7) weiterer Bewegungseinheiten (1) und/oder von externen Ein- und/oder Ausgabevorrichtungen (79) und/oder von Antriebseinrichtungen (5) und/oder von Energie, aufweist.

4. Bewegungseinheit nach einem der Ansprüche 1 bis 3, **dadurch gekennzeichnet, daß** das Schaltmodul (10) durch ein Servoventil gebildet ist.

5. Bewegungseinheit nach einem der Ansprüche 1 bis 4, **dadurch gekennzeichnet, daß** die Eingänge (52) über Einfachstecker mit Einzelleitungen verbunden und/oder über zumindest einen Mehrfachstecker (81) mit zumindest einer Mehrfachleitung verbunden und/oder über einen Busstecker (53) mit einer als zentrale Verbindungsleitung (179) ausgebildeten Busleitung (97) verbunden sind.

6. Bewegungseinheit nach einem der Ansprüche 1 bis 5, **dadurch gekennzeichnet, daß** die Steuereinrichtung (7), insbesondere das Steuer-Modul (9) und/oder die Schalt-Module (10) Ausgänge (54), beispielsweise für Signale und/oder Befehle an die zentrale Kontrolleinheit (134) und/oder an die Schalt-Module (10) und/oder an die Melde- und/oder Überwachungsorgane (16) und/oder an Steuereinrichtungen (7) weiterer Bewegungseinheiten (1) und/oder an externe Einund/oder Ausgabevorrichtungen (79) und/oder an Antriebseinrichtungen (5) und/oder für Energie, aufweisen.

7. Bewegungseinheit nach einem der Ansprüche 1 bis 3, **dadurch gekennzeichnet, daß** die Ausgänge (54) über Einfachstecker mit Einzelleitungen und/oder über den oder einen weiteren Mehrfachstecker (81) mit der oder einer weiteren Mehrfachleitung und/oder über den oder einen weiteren Busstecker (53) mit der oder einer weiteren zentralen Verbindungsleitung (179) verbunden sind.

8. Bewegungseinheit nach Anspruch 1, **dadurch gekennzeichnet, daß** die Steuereinrichtung (7), insbesondere das Steuer-Modul (9), einen Speicher (131) zur Abspeicherung, insbesondere von Einzelbewegungen aufweist.

9. Bewegungseinheit nach einem der Ansprüche 1 od. 2, **dadurch gekennzeichnet, daß** die Steuereinrichtung (7), insbesondere das Steuer-Modul (9) eine aus zumindest einem Logikelement (139) bestehende Logikeinheit aufweist, welche einen Teil (8) bildet, der die Logikinformation und/oder den Befehl und/oder die Businformation, beispielsweise zum Festlegen und/oder Überwachen der Positionen der Bauteile (3; 4) und/oder der Bewegungsparameter der Antriebseinrichtung (5) verarbeitet.

10. Bewegungseinheit nach einem der Ansprüche 1 od 2, **dadurch gekennzeichnet, daß** das Logikelement (139) der Steuereinrichtung(7), insbesondere des Steuer-Moduls (9), als Mikroprozessor (127) ausgebildet ist, der über Leiterbahnen (128) oder flexible Steuerleitungen (49) mit beispielsweise einer Schnittstelle (129) für den Busstecker (53) und/oder einer Auswerteeinheit (130) und/oder einem Speicher (131) und/oder einer externen Schnittstelle (129) und/oder einem Treiber (132) und/oder einem D/A-Wandler (133) verbunden ist.

11. Bewegungseinheit nach Anspruch 1, **dadurch gekennzeichnet, daß** die Steuereinrichtung (7) eine Steuerenergiequelle, insbesondere eine Batterie, einen Akkumulator und/oder eine Schnittstelle für eine externe Energiequelle aufweist.

12. Bewegungseinheit nach einem der Ansprüche 9 oder 10, **dadurch gekennzeichnet, daß** zumindest ein Logikelement (139) als Elektronikbaustein (178), beispielsweise als Mikroprozessor (127) oder aber auch als PC oder SPS ausgebildet ist.

13. Bewegungseinheit nach einem der Ansprüche 1 bis 3, **dadurch gekennzeichnet, daß** zumindest ein Schalt-Modul (10) und/oder ein Logikelement (139), beispielsweise als Pneumatikventil (11) und/oder Relais und/oder Schütz ausgebildet ist.

14. Bewegungseinheit nach Anspruch 1, **dadurch gekennzeichnet, daß** die Steuereinrichtung (7), insbesondere die Schalt-Module (10), mit zumindest einer, beispielsweise als Pneumatikantrieb (12), Hydraulikantrieb, Servomotorantrieb, Elektromotorantrieb, Handantrieb oder Piezoantrieb ausgebildeten Antriebseinrichtung (5) verbunden ist.

15. Bewegungseinheit nach einem der Ansprüche 1 bis 3, **dadurch gekennzeichnet**, daßdie Antriebseinrichtung (5) eine oder mehrere Übertragungselemente aufweist, welche mit zumindest einem Bauteil (3; 4) verbunden sind und die beispielsweise durch Kupplungen, Zahnriemen, Zahnstangen, Spindeln, Getrieben oder Kulissen ausgebildet sind.

16. Bewegungseinheit nach einem der Ansprüche 1 bis 3, **dadurch gekennzeichnet, daß** der Bauteil (4) über eine, beispielsweise als Linearführung (119) und/oder Dreh- und/oder Getriebeführung ausgebildete Führungsvorrichtung (6) an einem vorzugsweise rahmenförmigen, weiteren Bauteil (3) relativ beweglich angeordnet ist.

17. Bewegungseinheit nach einem der Ansprüche 1 bis 3, **dadurch gekennzeichnet, daß** zumindest ein Bauteil (3; 4) eine oder mehrere standardisierte Schnittstellen (95) für Steuerleitungen (49) und/oder Leitungen (50) von weiteren Montage und/oder Bearbeitungsvorrichtungen und/oder weiteren Bewegungseinheiten (1) und/oder für Energie und/oder von Steuereinrichtungen (7) aufweist.

18. Bewegungseinheit nach einem der Ansprüche 1 bis 3, **dadurch gekennzeichnet, daß** im Bereich der Schnittstellen (95, 101, 129) Eingänge (52) und/oder Ausgänge (54) der Steuereinrichtung (7) angeordnet sind, welche über Steckerverbindungen, insbesondere Kupplungsvorrichtungen (98), mit zumindest einer Steuereinrichtung (7) einer weiteren Bewegungseinheit (1) leitungsverbunden sind.

19. Bewegungseinheit nach einem der Ansprüche 1 bis 3, **dadurch gekennzeichnet, daß** die Schalt-Module (10) als Ventilpatronen (115) ausgebildet sind, welche in einer Führungsvorrichtung (103) der Antriebseinrichtung (5) angeordnet sind.

20. Bewegungseinheit nach einem der Ansprüche 1 bis 3, **dadurch gekennzeichnet, daß** das Schalt-Modul (10), insbesondere die Ventilpatrone, (115) ein Steuer-Modul (9) aufweist.

21. Bewegungseinheit nach einem der Ansprüche 1 bis 3, **dadurch gekennzeichnet, daß** der als Pneumatikzylinder (13) ausgebildete Pneumatikantrieb (12) stirnseitige Abschlußelemente (14) aufweist, die relativ zueinander verstellbar an oder in einem Zylinderrohr (15) der Pneumatikzylinder (13) gelagert sind.

22. Bewegungseinheit nach einem der Ansprüche 1 bis 21, **dadurch gekennzeichnet, daß** der Bauteil (3; 4) über eine am weiteren Bauteil (4; 3) angeordnete lösbare Feststellvorrichtung (122) in zumindest einer Bewegungsrichtung lagebegrenzt ist.

23. Bewegungseinheit nach Anspruch 22, **dadurch gekennzeichnet, daß** die Feststellvorrichtung (122) beispielsweise durch eine Dämpfungsvorrichtung (123), eine Bremsvorrichtung oder eine Arretiervorrichtung gebildet ist.

24. Bewegungseinheit nach Anspruch 1, **dadurch gekennzeichnet, daß** der Touch-Screen das Anzeigeelement (75) mit der Eingabevorrichtung (77) kombiniert.

25. Bewegungseinheit nach einem der Ansprüche 1 bis 24, **dadurch gekennzeichnet, daß** die Schnittstellen (95, 101, 129) und/oder die Eingänge (52) und/oder die Ausgänge (54) als Kupplungsvorrichtungen (73, 98) steckbar ausgebildet sind.

26. Bewegungseinheit nach Anspruch 2, **dadurch gekennzeichnet, daß** an und/oder in der pneumatischen Verteilerleiste (55) die Schalt-Module (10) angeordnet sind, welche über Öffnungen (63) mit in der pneumatischen Verteilerleiste (55) angeordneten Öffnungen (60) vorzugsweise steckbar verbunden sind.

27. Bewegungseinheit nach einem der Ansprüche 1 bis 26, **dadurch gekennzeichnet, daß** ein Bauteil (3; 4) zumindest eine Befestigungsvorrichtung (118) für die Melde- und/oder Überwachungsorgane (16), vorzugsweise in Form einer Führungsvorrichtung (103), aufweist.

28. Bewegungseinheit nach einem der Ansprüche 1 bis 27, **dadurch gekennzeichnet, daß** die Melde- und/oder Überwachungsorgane (16) und/oder die Schalt-Module (10) und/oder die Steuer-Module (9) auf der, beispielsweise durch eine Busleitung (97) gebildeten elektrischen Verteilerschiene (72) beweglich angeordnet sind.

29. Bewegungseinheit nach Anspruch 1, **dadurch gekennzeichnet, daß** die Meldeund/oder Überwachungsorgane (16) Steuer-Module (9) und/oder Logikelemente (139) aufweisen.

30. Bewegungseinheit nach Anspruch 1, **dadurch gekennzeichnet, daß** die durch das Anzeigeelement (75) und der Eingabevorrichtung (77) gebildete Ein- und/oder Ausgabevorrichtung (79), beispielsweise als Keyboard und/oder als Lesegerät für Chipkarten, Magnetkarten, CD's, Disketten, Bänder und/oder als Datenhandschuh und/oder als Touch-Screen ausgebildet ist.

31. Bewegungseinheit nach einem der Ansprüche 1 bis 30, **dadurch gekennzeichnet, daß** die Datenübermittlung von der Steuereinrichtung (7) zur Kontrolleinheit (134) und/oder von den einzelnen Bestandteilen der Steuereinrichtung (7) zu dieser drahtlos, beispielsweise optisch mittels Laser oder beispielsweise mittels Infrarot oder Ultraschall erfolgt.

32. Bewegungseinheit nach Anspruch 1, **dadurch gekennzeichnet, daß** die Position der Bauteile (3; 4) und/oder der Montageteile (2) mittels eines lokalen Positioniersystems ermittelt wird.

33. Bewegungseinheit nach Anspruch 30, **dadurch gekennzeichnet, daß** der Datenhandschuh über Eingänge (52) und/oder Ausgänge (54) mit der Steuereinrichtung (7) und/oder der Kontrolleinheit (134) vorzugsweise kuppelbar verbunden ist.

## Claims

1. Displacement unit (1), in particular a drive mechanism (5), with components (3; 4) which can be adjusted relative to one another via a guide mechanism (6), and having at least one control system (7) which can be connected to a controller (134) via an interface (129), which has at least one switch module (10), in particular a pneumatic valve (11), and at least one control module (9) which processes logic data or bus data, at least one switch module (10) co-operating with the control module (9), and the switch module (10) is connected via at least one line (50; 147; 157) carrying compressed air or hydraulic fluid or via a connecting orifice (82) or a passage (61) to the drive mechanism (5) in order to adjust the relative position of the component (3; 4), **characterised in that** the control module (9) and switch module (10) of the control system (7) are integrated in at least one of the components (3; 4) or mounted directly on the drive mechanism (5) formed by a pneumatic drive (12) or hydraulic drive, etc., and **in that** the control system (7) has at least one indicator element (75) which may be provided in the form of a display (76) with a plain text display, a digital display, light-emitting diodes or in the form of an acoustic data element, and an input device (77), and/or a signalling and/or monitoring element (16) is disposed in the component (3) of the drive mechanism (5) and is provided in the form of a limit switch and/or a proximity switch (17) and/or a displacement measuring system and/or a position detection system and/or vibration sensors and/or force sensors.

2. Displacement unit (1) as claimed in claim 1, **characterised in that** an electric distribution busbar (72) and/or a pneumatic distributor block (55) for receiving control and/or switch modules (9; 10) is disposed on at least one component (3; 4) and control lines (49) and/or lines (50) and/or passages (61) are integrated therein, being provided with orifices (60) in order to connect with the switch and/or control modules (10; 9) as well as the drive mechanism (5).

3. Displacement unit (1) as claimed in claim 1 or 2, **characterised in that** the control system (7), in particular the control module (9) and/or the switch module (10), has inputs (52), for example for signals and/or commands of a central controller (134) and/or the switch modules (10) and/or the signalling and/or monitoring elements (16) and/or from control systems (7) of other displacement units (1) and/or from external input and/or output devices (79) and/or drive mechanisms (5) and/or power.

4. Displacement unit as claimed in one of claims 1 to 3, **characterised in that** the switch module (10) is provided as a servo valve.

5. Displacement unit as claimed in one of claims 1 to 4, **characterised in that** the inputs (52) are connected via single connectors to individual lines and/or by at least one multipoint connector (81) to at least one multipoint line and/or via a bus connector (53) to a bus line (97) configured as a central connecting line (179).

6. Displacement unit as claimed in one of claims 1 to 5, **characterised in that** the control system (7), in particular the control module (9) and/or the switch module (10), has outputs (54), for example for signals and/or commands to the central controller (134) and/or to the switch modules (10) and/or to the signalling and/or monitoring elements (16) and/or to control systems (7) of other displacement units (1) and/or to external input and/or output devices (79) and/or to drive mechanisms (5) and/or for energy.

7. Displacement unit as claimed in one of claims 1 to 3, **characterised in that** the outputs (54) are connected via single connectors to individual lines and/or via the or another multipoint connector (81) to the or another multipoint line and/or via the or another bus connector (53) to the or another central connecting line (179).

8. Displacement unit as claimed in claim 1, **characterised in that** the control system (7), in particular the control module (9), has a memory (131), in particular for storing individual motions.

9. Displacement unit as claimed in one of claims 1 or 2, **characterised in that** the control system (7), in particular the control module (9) has a logic unit consisting of at least one logic element (139) forming a part (8) which processes the logic data and/or the command and/or the bus data, for example in order to fix and/or monitor the positions of the components (3; 4) and/or the motion parameters of the drive mechanism (5).

10. Displacement unit as claimed in one of claims 1 or 2, **characterised in that** the logic element (139) of the control system (7), in particular the control module (9), is provided in the form of a microprocessor (127), which is connected via conductor lines (128) or flexible control lines (49) with, for example, an interface (129) for the bus connector (53) and/or an evaluation unit (130) and/or a memory (131) and/or an external interface (129) and/or a driver (132) and/or a D/A converter (133).

11. Displacement unit as claimed in claim 1, **characterised in that** the control system (7) has a control power source, in particular a battery, an accumulator and/or an interface for an external power source.

12. Displacement unit as claimed in one of claims 9 or 10, **characterised in that** at least one logic element (139) is provided in the form of an electronic module (178), for example a microprocessor (127) or as a PC or a PLC.

13. Displacement unit as claimed in one of claims 1 to 3, **characterised in that** at least one switch module (10) and/or a logic element (139) is provided as a pneumatic valve (11) and/or a relay and/or a contactor for example.

14. Displacement unit as claimed in claim 1, **characterised in that** the control system (7), in particular the switch module (10), is connected to at least one drive mechanism (5) provided in the form of a pneumatic drive (12), hydraulic drive, servo drive, electric drive, manual drive or piezoelectric drive.

15. Displacement unit as claimed in one of claims 1 to 3, **characterised in that** the drive mechanism (5) has one or more transmission elements which are connected to at least one component (3; 4) and which are provided in the form of clutch mechanisms, timing belts, toothed racks, spindles, gear mechanisms or cranks.

16. Displacement unit as claimed in one of claims 1 to 3, **characterised in that** the component (4) is disposed on another, preferably frame-type component (3) so as to be relatively displaceable by means of a guide mechanism (6) provided in the form of a linear guide (119) and/or rotary guide and/or gear mechanism.

17. Displacement unit as claimed in one of claims 1 to 3, **characterised in that** at least one component (3; 4) has one or more interfaces (95) for control lines (49) and/or lines (50) of additional assembly and/or processing devices and/or other displacement units (1) and/or for energy and/or of control systems (7).

18. Displacement unit as claimed in one of claims 1 to 3, **characterised in that** inputs (52) and/or outputs (54) of the control system (7) are provided in the region of the interfaces (95, 101, 129) and are line-connected via plug connectors, in particular coupling mechanisms (98), with at least one control system (7) of another displacement unit(1).

19. Displacement unit as claimed in one of claims 1 to 3, **characterised in that** the switch modules (10) are provided in the form of valve cartridges (115) which are disposed in a guide mechanism (103) of the drive mechanism (5).

20. Displacement unit as claimed in one of claims 1 to 3, **characterised in that** the switch module (10), in particular the valve cartridge (115) has a control module (9).

21. Displacement unit as claimed in one of claims 1 to 3, **characterised in that** the pneumatic drive (12), provided in the form of a pneumatic cylinder (13), has terminal elements (14) which can be mounted on or in a cylinder barrel (15) of the pneumatic cylinder(13) so as to be adjustable relative to one another.

22. Displacement unit as claimed in one of claims 1 to 21, **characterised in that** the position of the component (3; 4) is limited in at least one direction of displacement by means of a detachable fixing device (122) on the other component (4; 3).

23. Displacement unit as claimed in claim 22, **characterised in that** the fixing device (122) is provided in the form of a damping mechanism (123), a brake mechanism or a checking mechanism.

24. Displacement unit as claimed in claim 1, **characterised in that** the touch screen combines the display element (75) with the input device (77).

25. Displacement unit as claimed in one of claims 1 to 24, **characterised in that** the interfaces (95, 101, 129) and/or the inputs (52) and/or the outputs (54) are provided as plug-in coupling mechanisms (73, 98).

26. Displacement unit as claimed in claim 2, **characterised in that** the switch modules (10) are disposed on and/or in the pneumatic distributor block (55) and can be connected, preferably by a plug-in arrangement, via orifices (63) with orifices (60) provided in the pneumatic distributor block (55).

27. Displacement unit as claimed in one of claims 1 to 26, **characterised in that** a component (3; 4) has at least one fixing device (118) for the signalling and/or monitoring elements (16), preferably in the form of a guide mechanism (103).

28. Displacement unit as claimed in one of claims 1 to 27, **characterised in that** the signalling and/or monitoring elements (16) and/or switch modules (10) and/or the control modules (9) are displaceably disposed on the electrical distribution busbar (72), which is provided as a bus line(97) for example.

29. Displacement unit as claimed in claim 1, **characterised in that** the signalling and/or monitoring elements (16) have control modules (9) and/or logic elements (139).

30. Displacement unit as claimed in claim 1, **characterised in that** the input and/or output device (79) comprising the display element (75) and the input device (77) is provided as a keyboard and/or as a reading device for chip cards, magnetic cards, CDs, floppy discs, tapes and/or as a data glove and/or as a touch screen.

31. Displacement unit as claimed in one of claims 1 to 30, **characterised in that** data is transmitted from the control system (7) to the controller (134) and/or from the individual elements of the control system (7) to the latter wirelessly, for example optically by means of laser or by means of infrared or ultrasound, for example.

32. Displacement unit as claimed in claim 1, **characterised in that** the position of the components (3; 4) and/or the assembly components (2) is determined by means of a local positioning system.

33. Displacement unit as claimed in claim 30, **characterised in that** the data glove is connected to the control system (7) and/or the controller (134), preferably by a coupling arrangement, via inputs (52) and/or outputs (54).

## Revendications

1. Unité de déplacement (1), notamment installation d'entraînement (5), avec des composants (3, 4) déplaçables par un dispositif de guidage (6) les uns relativement aux autres et avec un dispositif de commande (7) pouvant être relié par une interface (129) à une unité de contrôle (134) qui présente au moins un module de commutation (10), notamment une vanne pneumatique (11), et au moins un module de commande (9) traitant une information logique ou une information de bus et où est associé au module de commande (9) au moins un module de commutation (10), et en ce que le module de commutation (10) est relié par au moins un conduit (50 ; 147 ; 157) d'air comprimé ou de liquide hydraulique ou par une ouverture de raccordement (82) ou un canal (61) pour le déplacement relatif du composant (3 ; 4) à l'installation d'entraînement (5), **caractérisée en ce que** le module de commande (9) et le module de commutation (10) de l'installation de commande (7) est intégré dans au moins l'un des composants (3 ; 4) ou est monté directement sur l'installation d'entraînement (5) formée par une commande pneumatique (12) ou une commande hydraulique etc., et **en ce que** l'installation de commande (7) présente au moins un élément d'affichage (75) qui est réalisé, par exemple, comme affichage (76) avec un affichage de texte, un affichage des numéros, des diodes luminescentes ou comme élément d'information acoustique, et présente un dispositif d'entrée (77), et/ou un organe de signalisation et/ou de surveillance (16) est disposé dans le composant (3) de l'installation d'entraînement (5), et **en ce que** ceux-ci sont réalisés comme commutateurs de fin de course et/ou comme commutateurs d'approche (17) et/ou comme système de mesure de déplacement et/ou comme système de détermination de la position et/ou comme capteurs de secousses et/ou capteurs de forces.

2. Unité de déplacement (1), **caractérisée en ce qu'**il est disposé sur au moins un composant (3 ; 4) une barre collectrice électrique (72) et/ou une baguette collectrice pneumatique (55) pour la réception de modules de commande et/ou de commutation (9 ; 10) et **en ce que** des lignes de commande (49) et/ou des lignes (50) et/ou des canaux (61) y sont intégrés et présentent des ouvertures (60) en vue de la connexion aux modules de commutation et/ou de commande (10 ; 9) et à l'installation d'entraînement (5).

3. Unité de déplacement selon la revendication 1 ou 2, **caractérisée en ce que** l'installation de commande (7), notamment le module de commande (9) et/ou les modules de commutation (10) présentent des entrées (52), par exemple pour des signaux et/ou des instructions d'une unité de contrôle centrale (134) et/ou des modules de commutation (10) et/ou des organes de signalisation et/ou de surveillance (16) et/ou d'installations de commande (7) d'autres unités de déplacement (1) et/ou de dispositifs d'entrée et/ou d'émission externes (79) et/ou d'installations d'entraînement (5) et/ou d'énergie.

4. Unité de déplacement selon l'une des revendications 1 à 3, **caractérisée en ce que** le module de commutation (10) est formé par une servo-vanne.

5. Unité de déplacement selon l'une des revendications 1 à 4, **caractérisée en ce que** les entrées (52) sont reliées par des fiches simples à des lignes individuelles et/ou par au moins une fiche multiple (81) à au moins une ligne multiple et/ou par une fiche de bus (53) à une ligne de bus (97) réalisée comme ligne de liaison centrale (179).

6. Unité de déplacement selon l'une des revendications 1 à 5, **caractérisée en ce que** l'installation de commande (7), notamment le module de commande (9) et/ou les modules de commutation (10) présentent des sorties (54), par exemple pour des signaux et/ou instructions à l'unité de contrôle centrale (134) et/ou aux modules de commutation (10) et/ou aux organes de signalisation et/ou de surveillance (16) et/ou à des installations de commande (7) d'autres unités de déplacement (1) et/ou à des dispositifs d'entrée et/ou d'émission externes (79) et/ou à des installations d'entraînement (5) et/ou pour de l'énergie.

7. Unité de déplacement selon l'une des revendications 1 à 3, **caractérisée en ce que** les sorties (54) sont reliées par des fiches simples à des lignes individuelles et/ou par la ou une autre fiche multiple (81) à la ou une autre ligne multiple et/ou par la ou une autre fiche de bus (53) à la ou une autre ligne de liaison centrale (179).

8. Unité de déplacement selon la revendication 1, **caractérisée en ce que** l'installation de commande (7), notamment le module de commande (9) présente une mémoire (131) pour le stockage, notamment de déplacements individuels.

9. Unité de déplacement selon l'une des revendications 1 ou 2, **caractérisée en ce que** l'installation de commande (7), notamment le module de commande (9) présente une unité logique constituée d'au moins un élément logique (139) qui forme une pièce (8) qui traite l'information logique et/ou l'instruction et/ou l'information de bus, par exemple pour fixer et/ou surveiller les positions des composants (3 ; 4) et/ou des paramètres de déplacement de l'installation d'entraînement (5).

10. Unité de déplacement selon l'une des revendications 1 ou 2, **caractérisée en ce que** l'élément logique (139) de l'installation de commande (7), notamment du module de commande (9), est réalisé comme micro-processeur (127) qui est relié par des circuits conducteurs (128) ou des lignes de commande flexibles (49), par exemple à une interface (129) de la fiche de bus (53) et/ou à une unité d'évaluation (130) et/ou une mémoire (131) et/ou une interface externe (129) et/ou un transistor de commande (132) et/ou un convertisseur N/A (133).

11. Unité de déplacement selon la revendication 1, **caractérisée en ce que** l'installation de commande (7) présente une source d'énergie de commande, notamment une batterie, un accumulateur et/ou une interface pour une source d'énergie externe.

12. Unité de déplacement selon l'une des revendications 9 ou 10, **caractérisée en ce qu'**au moins un élément logique (139) est réalisé comme composant électronique (178), par exemple comme micro-processeur (127) ou aussi comme PC ou SPS.

13. Unité de déplacement selon l'une des revendications 1 à 3, **caractérisée en ce qu'**au moins un module de commutation (10) et/ou un élément logique (139) est réalisé, par exemple, comme vanne pneumatique (11) et/ou comme contacteur-interrupteur.

14. Unité de déplacement selon la revendication 1, **caractérisée en ce que** l'installation de commande (7), notamment les modules de commutation (10), sont reliés à au moins une installation d'entraînement (5) réalisée par exemple, sous forme d'entraînement pneumatique (12) d'entraînement hydraulique, d'entraînement par servo-moteur, d'entraînement à moteur électrique, d'entraînement à main ou d'entraînement piézoélectrique.

15. Unité de déplacement selon l'une des revendications 1 à 3, **caractérisée en ce que** l'installation d'entraînement (5) présente un ou plusieurs éléments de transmission qui sont reliés à au moins un composant (3 ; 4) et qui sont réalisés, par exemple, par des couplages, courroies dentées, crémaillères, broches, engrenages ou coulisses.

16. Unité de déplacement selon l'une des revendications 1 à 3, **caractérisée en ce que** le composant (4) est disposé par un dispositif de guidage (6) réalisé par exemple sous forme de guidage linéaire (119) et/ou de guidage tournant et/ou à transmission d'une manière relativement mobile à un autre composant (3) de préférence en forme de cadre.

17. Unité de déplacement selon l'une des revendications 1 à 3, **caractérisée en ce qu'**au moins un composant (3 ; 4) présente une ou plusieurs interfaces standard (95) pour des lignes de commande (49) et/ou des lignes (50) d'autres dispositifs de montage et/ou de traitement et/ou d'autres unités de déplacement (1) et/ou pour de l'énergie et/ou d'installations de commande (7).

18. Unité de déplacement selon l'une des revendications 1 à 3, **caractérisée en ce que** sont disposées au voisinage des interfaces (95, 101, 129) des entrées (52) et/ou des sorties (54) de l'installation de commande (7) qui sont reliées d'une manière conductrice par des connexions à fiche, notamment des dispositifs de couplage (98), à au moins une installation de commande (7) d'une autre unité de déplacement (1).

19. Unité de déplacement selon l'une des revendications 1 à 3, **caractérisée en ce que** les modules de commutation (10) sont réalisés sous forme de cartouches à vanne (115) qui sont disposées dans un dispositif de guidage (103) de l'installation d'entraînement (5).

20. Unité de déplacement selon l'une des revendications 1 à 3, **caractérisée en ce que** le module de commutation (10), notamment la cartouche à vanne (115) présente un module de commande (9).

21. Unité de déplacement selon l'une des revendications 1 à 3, **caractérisée en ce que** l'entraînement pneumatique (12) réalisé sous forme de vérin pneumatique (13) présente des éléments de fermeture (14) au côté frontal qui sont logés d'une manière déplaçable les uns relativement aux autres à ou dans un tube cylindrique (15) des vérins pneumatiques (13).

22. Unité de déplacement selon l'une des revendications 1 à 21, **caractérisée en ce que** la position du composant (3 ; 4) est limitée par un dispositif de fixation relâchable (122) disposé à l'autre composant (4 ; 3) au moins dans une direction de déplacement.

23. Unité de déplacement selon la revendication 22, **caractérisée en ce que** le dispositif de fixation (122) est formé, par exemple, par un dispositif d'amortissement (123), un dispositif de freinage ou un dispositif d'arrêt.

24. Unité de déplacement selon la revendication 1, **caractérisée en ce que** l'écran tactile combine l'élément d'affichage (75) avec le dispositif d'entrée (77).

25. Unité de déplacement selon l'une des revendications 1 à 24, **caractérisée en ce que** les interfaces (95, 101, 129) et/ou les entrées (52) et/ou les sorties (54) sont réalisées d'une manière enfichable sous forme de dispositifs de couplage (73, 98).

26. Unité de déplacement selon la revendication 2, **caractérisée en ce que** sont disposés à et/ou dans la baguette collectrice pneumatique (55) les modules de commutation (10) qui sont reliés, de préférence d'une manière enfichable, par des ouvertures (63) à des ouvertures (60) ménagées dans la baguette collectrice pneumatique (55).

27. Unité de déplacement selon l'une des revendications 1 à 26, **caractérisée en ce qu'**un composant (3 ; 4) présente au moins un dispositif de fixation (118) pour les organes de signalisation et/ou de surveillance (16), de préférence sous la forme d'un dispositif de guidage (103).

28. Unité de déplacement selon l'une des revendications 1 à 27, **caractérisée en ce que** les organes de signalisation et/ou de surveillance (16) et/ou les modules de commutation (10) et/ou les modules de commande (9) sont disposés d'une manière mobile sur la barre collectrice électrique (72) formée, par exemple, par une ligne de bus (97).

29. Unité de déplacement selon la revendication 1, **caractérisée en ce que** les organes de signalisation et/ou de surveillance (16) présentent des modules de commande (9) et/ou des éléments logiques (139).

30. Unité de déplacement selon la revendication 1, **caractérisée en ce que** le dispositif d'entrée et/ou d'émission (79) formé par l'élément d'affichage (75) et le dispositif d'entrée (77) est réalisé par exemple sous forme de clavier et/ou d'appareil de lecture de cartes à puce, de cartes magnétiques, de CDs, de disquettes, de bandes et/ou de gants de données et/ou d'écran tactile.

31. Unité de déplacement selon l'une des revendications 1 à 30, **caractérisée en ce que** la transmission des données de l'installation de commande (7) à l'unité de contrôle (134) et/ou des différents composants de l'installation de commande (7) à celle-ci a lieu sans fil, par exemple d'une manière optique par laser ou par exemple par infrarouges ou ultrasons.

32. Unité de déplacement selon la revendication 1, **caractérisée en ce que** la position des composants (3 ; 4) et/ou des parties de montage (2) est déterminée au moyen d'un système de positionnement local.

33. Unité de déplacement selon la revendication 30, **caractérisée en ce que** le gant de données est relié par des entrées (52) et/ou des sorties (54) à l'installation de commande (7) et/ou à l'unité de contrôle (134), de préférence par couplage.
